# EUROPEAN PATENT APPLICATION

(11) **EP 3 733 019 A1**
(43) Date of publication of application: **04.11.2020**
(21) Application number: 18895145.3
(22) Date of filing: 26.11.2018
(51) Int. Cl.: A45D 44/00

(54) **PHYSICAL APPEARANCE CORRECTION ASSISTANCE DEVICE, PHYSICAL APPEARANCE CORRECTION ASSISTANCE METHOD, AND COMPUTER PROGRAM**

(30) Priority: 26.12.2017 JP 2017249358
(71) Applicant: Panasonic Intellectual Property Management Co., Ltd., Osaka-shi, Osaka 540-6207 (JP)
(72) Inventor: SHINODA, Masayo, Osaka-shi, Osaka 540-6207 (JP); ONODERA, Mari, Osaka-shi, Osaka 540-6207 (JP); TAKESHITA, Sachiko, Osaka-shi, Osaka 540-6207 (JP); ASAI, Rieko, Osaka-shi, Osaka 540-6207 (JP); NISHI, Chie, Osaka-shi, Osaka 540-6207 (JP)
(74) Representative: Grünecker Patent- und Rechtsanwälte PartG mbB
(86) International application number: PCT/JP2018/043362
(87) International publication number: WO 2019/130933

(57) **Abstract**

In a makeup support apparatus (10), a feature related to an appearance of the body is analyzed from a body image obtained by capturing an image of the body based on a skeleton of the body, and body feature information indicating the analyzed feature is generated. A makeup capable of providing a visual correction of the appearance of the body is determined based on the generated body feature information. Print information related to printing of a makeup image on the sheet is generated based on the determined makeup. A makeup sheet is generated by printing the makeup image on the sheet based on the generated print information. A user sticks the generated makeup sheet to the body.

## Description

### Technical Field

The present disclosure relates to a body appearance correction support apparatus, a body appearance correction support method, and a computer program.

### Background Art

Colors used for makeup may differ for each user. In view of this, a technique is known for manufacturing cosmetics with a set of colors customized for each user. For example, PTL 1 discloses a technique in which when a user selects a set of ink colors to be used for makeup, a simulation of an appearance obtained when makeup is made using the selected colored ink set, and a simulation result is displayed. The selected set of colors is printed on a base sheet with the colored ink, and the printed base sheet is provided to the user.

### Citation List

### Patent Literature

PTL 1: Japanese Unexamined Patent Application Publication (Translation of PCT Application) No. 2017-503577

### Summary of Invention

It is difficult to apply proper makeup depending on a body without sufficient knowledge and skills. For example, in highlight and the low light makeup, an appropriate visual correction effect cannot be obtained unless the makeup is performed by taking into account the shape of the body and/or the color of the skin.

An aspect of the present disclosure provides, in supporting a visual correction of a body appearance using a sheet attachable to the body, an improvement in the customizability of the sheet that is produced and provided to an individual user.

The present disclosure provides a body appearance correction support apparatus that supports a visual correction of a body appearance using a sheet attachable to a body, including a feature analysis unit that analyzes a feature relating to an appearance shape of the body from a body image obtained by capturing an image of the body based on a skeleton of the body, and generates body feature information indicating the analyzed feature, a makeup determination unit that determines, based on the generated body feature information, a makeup that can provide a visual correction of the appearance shape of the body, and a print information generation unit that generates, based on the determined makeup, print information related to printing of a makeup image on the sheet.

It should be noted that general or specific embodiments may be implemented as an apparatus, a method, an integrated circuit, a computer program, a storage medium, or any combination of a system, an apparatus, a method, an integrated circuit, a computer program, and a storage medium.

According to an aspect of the present disclosure, in supporting of a visual correction of a body appearance using a sheet attachable to a body, an improvement is achieved in customizability of the sheet that is produced and provided to each user who receive the support.

### Brief Description of Drawings

[Fig. 1] Fig. 1 is a block diagram illustrating an example of a configuration of a makeup support apparatus according to a first embodiment.
[Fig. 2] Fig. 2 is a diagram for explaining an example of a method of determining a makeup color density in a makeup area.
[Fig. 3] Fig. 3 is a schematic diagram illustrating an example of a procedure of generating a face makeup sheet.
[Fig. 4] Fig. 4 is a diagram for explaining an example of a method of extracting a feature point of a face skeleton.
[Fig. 5A] Fig. 5A is a diagram for explaining an example of a method of determining highlight and low light makeup areas for a case where a face has an inverted triangular shape.
[Fig. 5B] Fig. 5B is a diagram for explaining an example of a method of determining highlight and low light makeup areas for a case where a face has an inverted triangular shape.
[Fig. 6A] Fig. 6A is a diagram for explaining an example of a method of determining highlight and low light makeup areas for a case where a face has a rhombic shape.
[Fig. 6B] Fig. 6B is a diagram for explaining an example of a method of determining highlight and low light makeup areas for a case where a face has a rhombic shape.
[Fig. 7] Fig. 7 is a schematic diagram illustrating an example of a procedure of generating a leg makeup sheet according to a second embodiment.
[Fig. 8] Fig. 8 is a diagram for explaining an example of a method of determining highlight and low light makeup areas of a makeup sheet for a leg.
[Fig. 9] Fig. 9 is a schematic diagram illustrating an example of a leg makeup sheet.
[Fig. 10] Fig. 10 is a diagram for explaining an example of a method of determining highlight and low light makeup areas in a decollete neck/chest area.
[Fig. 11A] Fig. 11A is a diagram for explaining an example of a method of determining a size of a makeup area depending on a body feature.
[Fig. 11B] Fig. 11B is a diagram for explaining an example of a method of determining a size of a makeup area depending on a body feature.
[Fig. 12] Fig. 12 is a flowchart illustrating an example of a procedure for generating a makeup sheet including an acupoint stimulus component according to a third embodiment.
[Fig. 13] Fig. 13 is a schematic diagram illustrating examples of acupoint positions on a face.
[Fig. 14] Fig. 14 is a schematic diagram illustrating examples of acupoint positions on legs.
[Fig. 15] Fig. 15 is a schematic diagram illustrating an example of a makeup sheet sticking assist apparatus according to a fourth embodiment.
[Fig. 16] Fig. 16 is a block diagram illustrating an example of a configuration of a makeup support apparatus according to a fifth embodiment.
[Fig. 17] Fig. 17 is a diagram for explaining an example of a method of determining makeup areas for eyebrows.
[Fig. 18] Fig. 18 is a diagram for explaining an example of a method of determining a makeup area for an eyebrow.
[Fig. 19] Fig. 19 is a block diagram illustrating an example of a configuration of a makeup support apparatus according to a sixth embodiment.
[Fig. 20A] Fig. 20A is a diagram for explaining an extended length L1 of a double-eyelid line and an extended length L2 of an eye line.
[Fig. 20B] Fig. 20B is a diagram for explaining an extended length L1 of a double-eyelid line and an extended length L2 of an eye line.
[Fig. 21] Fig. 21 is a diagram for explaining a method of determining a shape of a double-eyelid line.
[Fig. 22A] Fig. 22A is a diagram for explaining an example of a method of determining a shape of an eye line.
[Fig. 22B] Fig. 22B is a diagram for explaining an example of a method of determining a shape of an eye line.
[Fig. 23A] Fig. 23A is a diagram for explaining a method of determining an eye shadow area.
[Fig. 23B] Fig. 23B is a diagram for explaining a method of determining an eye shadow area.
[Fig. 24] Fig. 24 is a diagram illustrating an apparatus of assisting sticking an eyeline makeup sheet.
[Fig. 25] Fig. 25 is a block diagram illustrating an example of a hardware configuration of a makeup support apparatus according to the present disclosure. Description of Embodiments

Embodiments of the present invention are described in detail below with reference to the accompanying drawings. However, a description in more detail than necessary may be omitted. For example, a detailed description of a well-known item or a duplicated description of substantially the same configuration may be omitted. This is to avoid unnecessary redundancy in the following description thereby facilitating understanding by those skilled in the art.

Note that the accompanying drawings and the following description are provided in order for those skilled in the art to fully understand the present disclosure, and are not intended to limit the subject matter described in the claims.

### (First Embodiment)

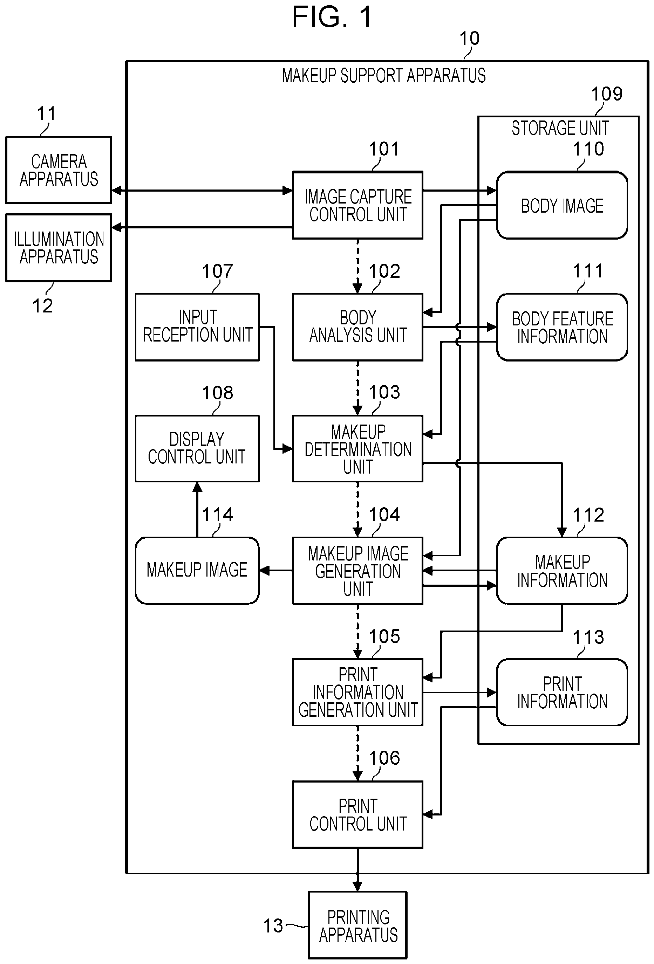

First, an example of a configuration of a makeup support apparatus 10 is described with reference to Fig. 1. The makeup support apparatus 10 is an example of a body appearance correction support apparatus for supporting a visual correction of a body appearance using a sheet attachable to the body.

The makeup support apparatus 10 is an apparatus for generating a sheet for making up a body by sticking it on the body (hereinafter, referred to as a "makeup sheet"), or for supporting generating such a makeup sheet.

The makeup support apparatus 10 prints makeup ink on a thin and transparent sheet (a thin film) thereby generating a makeup sheet. A user may stick the makeup sheet to various body parts such as a face, a leg, an arm, a back, a chest, and a nail to change the appearance of the parts, that is, to achieve a visual correction for the parts. For example, the user can make the face look small (a small face effect) or make it look three-dimensional by sticking a makeup sheet including low light and highlight makeups printed thereon to the face. For example, the user can make a leg look thin by applying a makeup sheet including low light and highlight makeup printed thereon to the leg (slimming effect). That is, the makeup support apparatus 10 generates a makeup sheet that makes the user's face and proportions look more attractive.

Body features such as a body shape, a skin color, and the like are different for each user. Therefore, to obtain a sufficient visual correction effect, it is necessary to generate a suitable makeup sheet depending on the body features of the user. The makeup support apparatus 10 supports the generation of such a makeup sheet.

The makeup support apparatus 10 includes an image capture control unit 101, a body analysis unit 102, a makeup determination unit 103, a makeup image generation unit 104, a print information generation unit 105, a print control unit 106, and an input reception unit 107, a display control unit 108, and a storage unit 109. Note that the makeup support apparatus 10 may have only some of these functions.

The image capture control unit 101 controls a camera apparatus 11 to capture an image of a body of a user, and acquires the captured body image 110 from the camera apparatus 11. The image capture control unit 101 stores the acquired body image 110 in the storage unit 109 or provides the body image 110 to the body analysis unit 102. Note that the image capture control unit 101 may control the position and/or the amount of light of an illumination apparatus 12 in an image capture operation. This allows it to adjust the shadow of the body image 110. The image capture control unit 101 may control the camera apparatus 11 to capture either a still image or a moving image. That is, the body image 110 is not limited to a still image, but may be a moving image.

The body analysis unit 102 analyzes a body feature from the body image 110 and generates body feature information 111 based on the analysis result. The body feature information 111 may include, for example, information indicating a body part, information indicating a body unevenness, information indicating a body skeleton shape, information indicating a feature position of a skeleton (hereinafter, referred to as a "skeleton feature point"), and/or information indicating a skin color of the body. The body analysis unit 102 stores the generated body feature information 111 in the storage unit 109 or provides the information to the makeup determination unit 103.

The makeup determination unit 103 determines a makeup suitable for the shape of the body and/or the skin color of the user based on body feature information 111. For example, the makeup determination unit 103 determines areas in which highlight and low light makeup appropriate for the user's skeleton shape are applied (hereinafter, referred to as "makeup areas") and also determines colors of makeup applied to the makeup areas (hereinafter, referred to as "makeup colors"). The makeup determination unit 103 generates makeup information 112 including the determination result, and stores it in the storage unit 109 or provides it to the makeup image generation unit 104.

The makeup image generation unit 104 generates a makeup image 114, which is an image obtained by applying makeup based on the makeup information 112 to the body image 110. The makeup image generation unit 104 may display the generated makeup image 114 on a display apparatus (not shown) such as a display via the display control unit 108. This makes it possible for the user to visually check the appearance of the body which will be achieved when the makeup is applied, that is, the appearance of the body obtained when the makeup sheet is stuck.

The input reception unit 107 accepts a request for an adjustment of (or a change in) the makeup issued by the user based on the checking of the makeup image 114. When the input reception unit 107 accepts the request for the adjustment of the makeup issued by the user, the input reception unit 107 sends information indicating the requested adjustment to the makeup determination unit 103. The makeup determination unit 103 reflects the request for the adjustment in the makeup information 112. This makes it possible to obtain the makeup information 112 adjusted to meet the request issued by the user. That is, it is possible to suppress generation of a makeup sheet that does not meet the request issued by the user.

The print information generation unit 105 determines how to print the makeup image on a sheet according to the details of the makeup information 112, and generates print information 113 including the result of the determination. For example, the print information generation unit 105 determines a print area on the sheet and an ink respectively corresponding to the makeup area and the makeup color. The print information generation unit 105 stores the generated print information 113 in the storage unit 109 or provides it to the print control unit 106.

The print control unit 106 controls the printing apparatus 13 such that the makeup ink is printed in the print area on the sheet according to the print information 113 thereby generating the makeup sheet. The print control unit 106 may transmit the print information 113 to the printing apparatus 13, and the printing apparatus 13 may produce a makeup sheet based on the received print information 113. Alternatively, the print control unit 106 may transmit the print information 113 to a predetermined facility where the printing apparatus 13 is installed, and the producing of the makeup sheet may be performed in the facility. In a case where the makeup sheet has a relatively large size, it may be transported in the form of a roll package. This prevents the makeup sheet from being creased.

Next, functions of the makeup support apparatus 10 are described in detail below for each function.

### <Details of image capture control unit and body analysis unit>

The image capture control unit 101 and the body analysis unit 102 may have one of or a combination of two or more functions (A1) to (A6) described below.
(A1) The image capture control unit 101 measures the illuminance using an illuminometer while gradually increasing the amount of light emitted by the illumination apparatus 12 and executes an image capture operation when a predetermined illuminance is measured thereby acquiring the body image 110. This allows it to improve the robustness in the colorimetry against the disturbance, which makes it possible for the body analysis unit 102 and the makeup determination unit 103 to more accurately extract the skin color.
(A2) In an example described here, it is assumed that the camera device 11 is a three-dimensional camera apparatus configured to capture a three-dimensional image of a body. The image capture control unit 101 captures a three-dimensional image of the body using the three-dimensional camera apparatus 11 and acquires the body image 110 including three-dimensional information from the three-dimensional camera apparatus 11. This makes it possible for the body analysis unit 102 to more accurately analyze the unevenness, the skeleton shape, and/or the like of the body from the body image 110 including the three-dimensional information. Note that the body analysis unit 102 may calculate the curvature of the unevenness, the skeleton shape, and/of the like of the body from the body image 110 including the three-dimensional information, and may incorporate the curvature in the body feature information 111.
(A3) The image capture control unit 101 continuously captures images of a face of the user at different angles while having the user move her/his face to left and right. The body analysis unit 102 analyzes the features of the face using the plurality of face images captured in the above-described manner, and generates face feature information, which is an example of the body feature information 111. This allows the body analysis unit 102 to more accurately analyze the face feature as compared to a case where a face image captured from one direction is used.
(A4) The image capture control unit 101 controls the illumination apparatus 12 to illuminate a body part from different directions and controls the camera apparatus 11 to image the body part. This makes it possible for the image capture control unit 101 to acquire the body image 110 in which a shade and a shadow caused by unevenness of the body part are represented more clearly. Thus, the body analysis unit 102 can more accurately analyze the unevenness and the skeleton shape of the body by using the body image 110 captured in the above-described manner. Note that the appropriate direction of illumination may differ depending on the body part whose image is to be captured.
(A5) The image capture control unit 101 captures and acquires at least two body images 110 which are different in expression or posture. The body analysis unit 102 analyzes the amount of change in the body shape in the body image 110, and determines a skeleton feature point based on an area where the amount of change is less than a predetermined threshold (that is, the change in the body shape is relatively small). In short, the body analysis unit 102 analyzes a part that moves and a part that does not move when a facial expression or a posture is changed thereby detecting a feature point indicating a shape of a skeleton such as a zygomatic bone or a jaw bone, separately from a feature point indicating a shape of a muscle or subcutaneous tissue such as a cheek meat or a jaw meat.
(A6) The body analysis unit 102 analyzes the body feature (for example, concave and convex portions) of each user based on the body feature information 111 of a typical body. The body feature information 111 of the typical body may vary depending on the user's sex, age, height and/or weight, and the like. This allows the body analysis unit 102 to more accurately analyze the body feature for each user.

### <Details of makeup determination unit and makeup image generation unit>

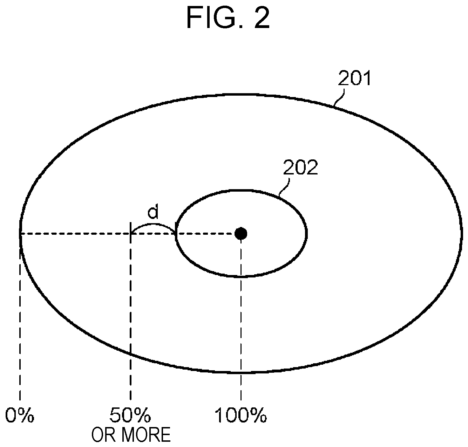

The makeup determination unit 103 and the makeup image generation unit 104 may have one of or a combination of two or more functions (B1) to (B7) described below.
(B1) When the user checks the makeup image 114 and issues a request for a correction to enhance the highlight (or the gloss), if the request is received via the input reception unit 107, the makeup determination unit 103 corrects makeup information 112 such that the color tone or the L value of the makeup color of the highlight portion is increased in units of pixels. The makeup image generation unit 104 generates the makeup image 114 using the corrected makeup information 112 and redisplays it. By repeating the above process, the user can inform the makeup support apparatus 10 of the desired makeup (that is, the user can input the information indicating the desired makeup).
(B2) The makeup determination unit 103 extracts a skin color in a low light makeup area using the body feature information 111 (or the body image 110). The makeup determination unit 103 reduces the color tone of the extracted skin color while maintaining the hue or reduces the L value while maintaining the a value and the b value in the Lab color space and determines the makeup color in the low light makeup area. Thus, the makeup determination unit 103 is capable of determining a low light makeup color suitable for the skin color of the user. However, the makeup determination unit 103 does not necessarily need to extract the skin color in the low light makeup area. For example, the makeup determination unit 103 may extract skin colors at a plurality of points on the body, and may determine the makeup color in the low light makeup area using the average value of the extracted skin colors. The plurality of points on the body may be, for example, a plurality of points in a face area in a case where the low light makeup area is on the face, or may be a plurality of points in a decollete neck/chest area in a case where the low light makeup area is in the decollete neck/chest area.
(B3) The makeup determination unit 103 calculates the curvature of a convex portion of the body from the body feature information 111, and determines the size of the highlight makeup area in the convex portion depending on the magnitude of the curvature. For example, the makeup determination unit 103 may determine the size of the highlight makeup area such that the smaller the curvature of the convex portion (that is, the steeper the convex surface), the smaller (narrower) the highlight makeup area, and the larger the curvature of the convex portion (that is, the softer the convex surface), the larger (wider) the highlight makeup area. Thus, the makeup determination unit 103 is capable of determining the highlight makeup area suitable for the body shape of the user.
(B4) As shown in Fig. 2, the makeup determination unit 103 determines the makeup color density at positions apart by a distance d or greater from the outer periphery of a center area 202 included in the highlight makeup area 201 such that the makeup color density is equal to or greater than 50% of the density of the makeup color in the center area 202. The distance d is preferably 2 mm or greater because experiences show in many cases that positioning errors that occur in sticking the makeup sheet are less 2 mm. Note that the makeup determination unit 103 may determine the density of the highlight makeup color such that the density decreases as the distance from the center area increases, that is, such that the makeup color has a gradation. This allows the user to easily apply a makeup sheet to an appropriate position without having to perform high-precision positioning such that highlight makeup is applied while hiding a skin spot or a bruise with the makeup color in the center area.
(B5) The makeup determination unit 103 presents a user with options of makeup image keywords each representing an makeup image. The user selects a desired makeup image keyword from the options and inputs the selected keyword to the input reception unit 107. The makeup determination unit 103 determines highlight and low light makeup colors based on the selected makeup image keyword.

For example, the makeup determination unit 103 presents "glossy", "mat", "semi-mat", and the like as options of makeup image keywords related to texture. In addition, the makeup determination unit 103 presents "sharp", "adult", "vivid", and the like as options of the makeup image keywords regarding the atmosphere. Furthermore, the makeup determination unit 103 presents "summer-like", "Christmas", and the like as options of makeup image keywords related to the sense of season. Furthermore, the makeup determination unit 103 presents "party", "interview", and the like as options of the makeup image keywords related to the place.

The makeup determination unit 103 may determine the makeup color by referring to keyword information in which each makeup image keyword is associated with highlight and lowlight makeup colors. In the keyword information, a makeup image keyword may be further associated with a position and a shape or the like of the highlight and low light makeup areas.

This makes it possible for the user to select a makeup image keyword and easily send (input) the desired makeup to the makeup support apparatus 10.
(B6) The user draws highlight and low light makeup on the body image 110 via the input reception unit 107. The makeup determination unit 103 determines a highlight makeup area, a lowlight makeup area, and a makeup color based on the drawn makeup. Thus, the user can easily send (input) information indicating the desired makeup to the makeup support apparatus 10.
(B7) The image capture control unit 101 captures an image of a body before and after the makeup is applied. The makeup determination unit 103 extracts an area in the body image 110 where there is a change in color before and after the makeup is applied. That is, the makeup determination unit 103 extracts the area and the color of the makeup actually applied to the body. The makeup determination unit 103 determines the highlight makeup area, the lowlight makeup area, and the makeup color based on the extracted area. Thus, it is possible to easily send (input) information indicating the desired makeup to the makeup support apparatus 10. Furthermore, the user can easily reproduce the makeup similar to the body image 110 captured after the makeup sheet produced in the above-described manner is stuck and the makeup is applied.

### <Details of print information generation unit>

The print information generation unit 105 of the makeup support apparatus 10 may have one of or a combination of two or more functions (C1) to (C5) described below.
(C1) For example, when the user wants to apply makeup such that the stain on the cheek is hidden and cheek makeup is applied to the cheek, the print information generation unit 105 generates print information 113 for performing ink-jet lamination printing using an ink for concealing the stain and an ink corresponding to the cheek makeup color. This makes it possible to reduce the printing time and the time required for sticking, as compared to a case where a makeup sheet for concealing a stain on the cheek and a sheet for applying cheek makeup are separately printed and stuck to the cheek.
(C2) The print information generation unit 105 selects a fragrance component according to the makeup image keyword selected by the user in (B5), and generates print information 113 specifying that printing is to be performed using an ink containing the selected fragrance component. Alternatively, the print information generation unit 105 may generate print information 113 specifying that a sheet containing the selected fragrance component is to be used in printing. Note that a makeup image keyword and a fragrance component may be associated in advance. This makes it possible to generate a makeup sheet that produces not only visual effects but also scent effects.
(C3) The print information generation unit 105 generates print information 113 to be printed using a special ink that is colored or emits light in response to light or a change in temperature. This makes it possible to generate a makeup sheet in which characters or designs are displayed under limited conditions without affecting the visual effects.

For example, the print information generation unit 105 generates print information 113 for printing personal information (or identification information) indicating a user's name, address and the like using a special ink. The print information 113 may include information such as a character, a number, a bar codes and/or a QR code (registered trademark) indicating personal information (or identification information).

By sticking the makeup sheet produced in the above-described manner, the user can certify his/her identity without having to carry a name tag or a certificate.
(C4) In a case where highlight brightness is relatively high (greater than or equal to a predetermined threshold value), the print information generation unit 105 generates the print information 113 specifying that an ink including a lame material or a white pigment is to be used. This makes it possible to print the highlight in a more beautiful manner.
(C5) In a case where the L value of the skin color is relatively low (for example, smaller than a predetermined threshold value), the print information generation unit 105 generates the print information 113 specifying that printing is to be performed using an ink corresponding to the makeup color after printing is performed using an ink including a white pigment. This results in an improvement of coloring of the makeup sheet.

### <Details of print control unit>

The print control unit 106 may have one of or a combination of two or more functions (D1) to (D4) described below.
(D1) The print control unit 106 prints a first ink on a sheet by an ink-jet method and then prints a second ink at a required position of the sheet by a spray method. For example, the print control unit 106 prints, by the spray method, the second ink including a lame material, a pearl material, or the like, which has a relatively large specific gravity or particle size in liquid and easily settles.
(D2) In a case where the print information 113 specifies the inclusion of a lame material, a pearl material, or the like, the print control unit 106 employs a sheet including a mixture of polymer particles, the lame material and/or the pearl pigment material. This allows a reduction in a takt time in the printing process as compared with the case where the ink including the lame material or the like is printed by the ink-jet method.

The diameter of the particles of the material mixed in the sheet is preferably 250 µm or less. In a case where particles larger than 250 µm in diameter are mixed in the sheet, the sheet is easily broken (that is, the durability is low).
(D3) The print control unit 106 prints a ink containing an oil absorbing component on a sheet's surface that is to be in contact with the skin. The print control unit 106 prints a ink containing an oil absorbing component disposed on a side of the sheet in contact with the skin. This results in a reduction in an effect of an oil component coming from the skin on the color tone of the makeup, and thus the durability of the makeup sheet is improved.
(D4) The print control unit 106 prints a paste for fixing the lame on the sheet and then prints the ink containing the lame material. This makes it possible to print a fine lame material. In addition, an occurrence of peeling of the lame material is reduced, and the durability of the makeup sheet is improved.

### <Examples of sheet components>

Next, examples of sheet components are described. The sheet may have a structure of a thin film, a highly breathable mesh, or a nonwoven fabric. In order to facilitate handling, the sheet may be configured such that the sheet (the thin film) is placed on a supporting material (a substrate). The supporting material is, for example, paper, a nonwoven fabric, a plastic film having a surface subjected to hydrophilic treatment, a water-absorbing sponge, or the like.

Examples of the sheet components include polyesters, polyether, polyamides/polyimides, polysaccharides, silicones, acrylics, olefin resins, polyurethanes, conductive polymers, and other polymers.

Examples of polyesters include polyglycolic acid, polylactic acid, polycaprolactone, polyethylene succinate, polyethylene terephthalate, and the like.

Examples of polyether include polyethylene glycol, polypropylene glycol, and the like.

Examples of polyamides /polyimides include nylon, polyglutamic acid, polyimide and the like.

Examples of polysaccharides include pullulan, cellulose (carboxymethylcellulose, hydroxyethylcellulose, etc.), pectin, arabinoxylan, glycogen, amylose, amylopectin, hyaluron, and the like. Alternatively, the polysaccharide may be, for example, starch, chitin, chitosan, alginic acid, corn starch or the like.

Examples of silicones include acrylic silicone, trimethylsiloxysilicic acid, dimethicone, and the like.

Examples of acrylic acid includes, acrylic acid/silicone copolymers, alkyl acrylate/amide copolymers, and the like.

Examples of olefin resins include polyethylene, polypropylene, and the like.

Examples of conductive polymer include polyaniline, polythiophene, polypyrrole, and the like.

Examples of other polymers include polyvinyl alcohol, polycarbonate, polystyrene, Nafion, and the like.

### <Examples of ink composition>

For example, the ink includes, as composition, water, alcohol, a coloring material, and/or a film-forming agent. The ink used for printing the highlight makeup may include a pearl agent, a lame agent, and/or a soft focus agent.

Examples of alcohol includes ethanol, ethyl alcohol, glycerin, propanediol, and the like.

Examples of coloring materials include an inorganic pigment such as zinc oxide, titanium oxide, aluminum hydroxide, aluminum oxide, zirconium oxide, cyclopentasiloxane, silica, cerium oxide, and the like. Alternatively, the coloring material may be an organic pigment, a dye, a phosphor, or the like.

Examples of the pearl agent, the soft focus agent, or the lame agent are as follows.
- White pigments such as titanium oxide, zinc oxide, cerium oxide, barium sulfate, or the like.
- White bulk powder such as talc, muscovite, phlogopite, rubellite, biotite, synthetic mica, sericite, synthetic sericite, kaolin, silicon carbide, bentonite, smectite, silicic anhydride, aluminum oxide, magnesium oxide, zirconium oxide, antimony oxide, diatomaceous earth, aluminum silicate, aluminum magnesium silicate, calcium silicate, barium silicate, magnesium silicate, calcium carbonate, magnesium carbonate, hydroxyapatite, boron nitride or the like.
- Glittering powder such as calcium aluminum borosilicate, titanium dioxide coated mica, titanium dioxide coated glass powder, titanium dioxide coated bismuth oxychloride, titanium dioxide coated mica, titanium dioxide coated talc, iron oxide coated mica, iron oxide coated mica titanium, iron oxide coated glass powder, navy blue treated mica titanium, carmine treated mica titanium, bismuth oxychloride, fish scale foil, polyethylene terephthalate/aluminum/epoxy laminated powder, polyethylene terephthalate/polyolefin laminated film powder, or the like.
- Natural organic powders such as N-acyllysine and other low molecular weight powders, silk powder, cellulose powder, or the like.
- Metal powder such as aluminum powder, gold powder, silver powder, or the like.
- Compound powder such as particulate titanium oxide coated mica titanium, particulate zinc oxide coated mica titanium, particulate zinc oxide coated mica titanium, silicon dioxide containing titanium oxide, silicon dioxide containing zinc oxide, or the like.
- Kapok fiber, polymethyl methacrylate crosspolymer, non-crosslinked acrylic particles, or the like.

Examples of the film agent or film-forming agent include acrylates copolymer, (alkyl acrylate/octylacrylamide) copolymer, trricontanil PVP, (eicosene/vinylpyrrolidone) copolymer, (vinylpyrrolidone/hexadecene) copolymer, glyceryl glucoside, glycosyl trehalose, hydrogenated starch hydrolysate (sugar alcohol), emulsion resin, and the like.

Next, a description is given below for a case in which a makeup sheet for applying highlight and low light makeup to a face, which is an example of a body, is generated using the makeup support apparatus 10 shown in Fig. 1.

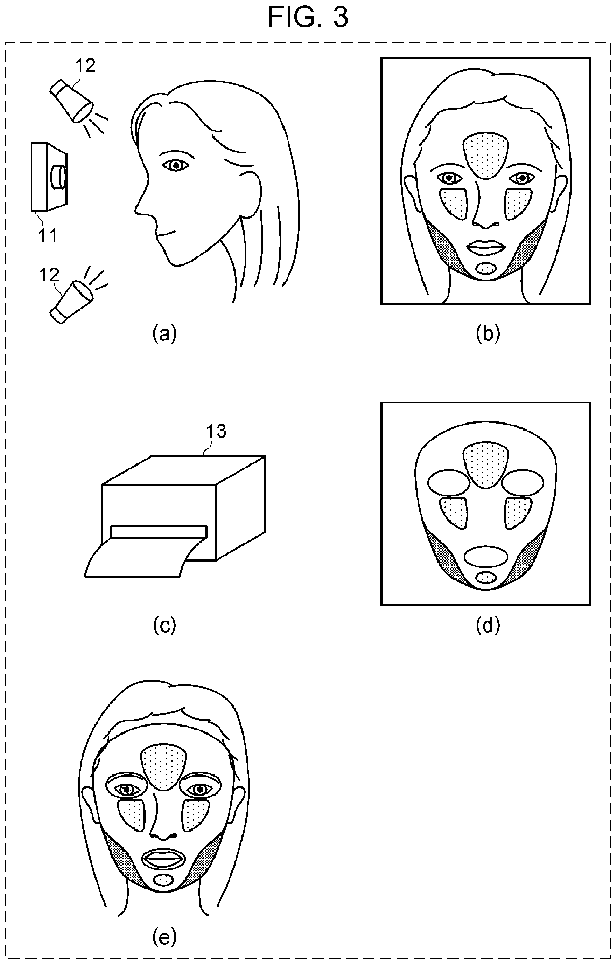

A procedure for generating a makeup sheet to be stuck to a face is described below with reference to Fig. 3.

First, a user turns his/her face toward the camera apparatus 11 as shown in Fig. 3(a). Note that at least one illumination apparatus 12 is disposed at a position so as to illuminate the face.

The image capture control unit 101 controls the illumination apparatus 12 to illuminate the face and controls the camera apparatus 11 to capture an image of the face from the front thereby acquiring a face image as an example of the body image 110.

Next, the body analysis unit 102 analyzes the face image and generates face feature information, which is an example of the body feature information 111. Here, the body analysis unit 102 analyzes the skeleton shape of the face using the face image, and extracts skeleton feature points of the face. The skeleton feature points may be represented by coordinate points in a three-dimensional space. A method of extracting the skeleton feature points of the face will be described later.

Next, the makeup determination unit 103 determines the highlight and low light makeup areas and their makeup colors suitable for the user's face based on the skeleton feature points of the face. A method for determining the face makeup areas will be described later.

Next, the makeup image generation unit 104 generates makeup image 114 representing an image of the face subjected to the highlight and low light makeups using the makeup information 112. The makeup image generation unit 104 then displays the makeup image 114 on the display apparatus via the display control unit 108, as shown in Fig. 3(b).

The user checks the makeup image 114. In a case where the user wants to correct the makeup, the user inputs the information indicating the desired correction via the input reception unit 107. The input reception unit 107 informs the makeup determination unit 103 of the inputted correction. The makeup determination unit 103 corrects the makeup information 112 based on the content of the correction, and the makeup image generation unit 104 displays the corrected makeup image 114.

In a case where the user does not need to correct the makeup, the user inputs "confirmed" via the input reception unit 107. The input reception unit 107 informs the makeup determination unit 103 that the "confirmed" has been input. Upon receiving the information, the makeup determination unit 103 finalizes the makeup information 112.

Next, the print information generation unit 105 generates print information 113 for printing a face makeup sheet based on the finalized makeup information 112.

Next, as shown in Fig. 3(c), the print control unit 106 controls the printing apparatus 13 to print the face makeup sheet based on the print information 113. Thus, as shown in Fig. 3(d), the makeup sheet including the highlight and low light makeup images printed thereon is generated.

The user sticks the makeup sheet placed on a supporting material to his/her face and peels off the supporting material as shown in Fig. 3(e). As a result, the makeup sheet is attached to the user's face, and the highlight makeup and the low light makeup suitable for the user's face are applied to the user's face.

### <Method of extracting skeleton feature points of face>

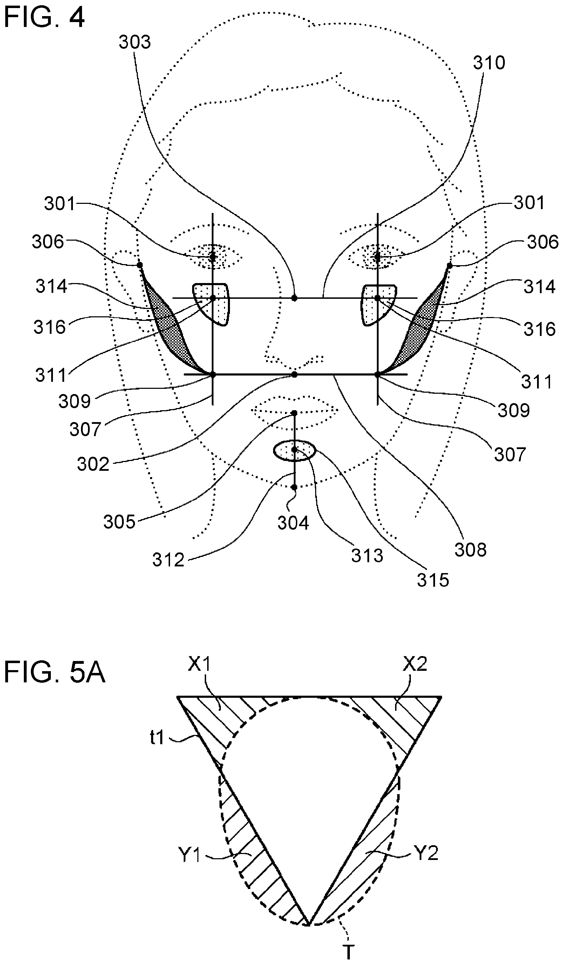

The skeleton feature points of a face may be extracted by one of or a combination of two or more methods (E1) to (E4) described below.
(E1) As shown in Fig. 4, the body analysis unit 102 extracts face feature points related to face parts such as eyeballs 301, a part just below a nose 302, a center of a nose muscle 303, a center point of a chin 304, a center point of a lip 305, a vertex 306 of each temple, and the like. Next, the body analysis unit 102 extracts an intersection 309 between a vertical line 307 passing through an eyeball 301 and a horizontal line 308 passing the part below the nose 302 for each of vertical lines 307 as skeleton feature points below a cheekbone. Furthermore, an intersection 311 between a vertical line 307 and a horizontal line 310 passing through the nose muscle center 303 is extracted for each vertical line 307 as skeleton feature points of the zygomatic bone. In addition, the body analysis unit 102 extracts a center point 313 of a line segment 312 connecting a center point 304 of the chin and a center point 305 of the lips as a skeleton feature point of a mandible.
(E2) As shown in Fig. 3(a), the image capture control unit 101 controls the illumination apparatus 12 disposed above the face so as to illuminate the face from above and controls the camera apparatus 11 so as to capture an image of the face thereby acquiring an face image illuminated from above. Furthermore, the image capture control unit 101 controls the illumination apparatus 12 disposed below the face so as to illuminate the face from below and controls the camera apparatus 11 so as to capture an image of the face thereby acquiring an face image illuminated from below.

The body analysis unit 102 detects a skeleton feature point 311 on an upper part of the zygomatic bone by detecting an area in which the brightness is relatively high (higher than a predetermined threshold value) in the face image illuminated from above and in which the brightness is relatively low (lower a predetermined threshold value) in the face image illuminated from below as shown in Fig. 4.

The makeup determination unit 103 determines, as the highlight makeup area, an area in the vicinity of the skeleton feature point 311 on the upper part of the cheekbone.

(E3) The image capture control unit 101 captures an image of a face with a first expression thereby acquiring a first-expression face image. Furthermore, the image capture control unit 101 captures an image of a face with a second expression thereby acquiring a second-expression face image.

The body analysis unit 102 detects a skeleton feature point by detecting an area in which a change in the image is relatively small (smaller than a predetermined threshold value) between the first-expression face image and the second-expression face image.

A change in facial expression is generally produced by a movement of facial muscles. Therefore, the skeleton can be extracted, separately from the muscle and the subcutaneous tissue, by detecting a part that does not significantly move in response to a change in the face expression. Note that there is no particular restriction on the first expression and the second expression as long as they are different from each other. For example, the first expression and the second face expression may be a non-expression and a smile, respectively. Alternatively, the first expression and the second expression may be a combination of two of followings: an expression with a closed mouth; an expression with a wide open mouth; and an expression with a narrowed mouth.

(E4) The image capture control unit 101 controls the illumination apparatus 12 to illuminate the face and controls the camera apparatus 11 to capture an image of the face thereby acquiring an illuminated face image.

The body analysis unit 102 detects a contour of the face from the illuminated face image. The body analysis unit 102 then extracts one or more first candidate points from a segment of the detected contour in which a relatively great change (greater than a predetermined threshold value) occurs in the curvature.

Furthermore, the body analysis unit 102 extracts one or more second candidate points from an area where a relatively large change occurs in shade (a change in brightness greater than or equal to a predetermined threshold value occurs) in the illuminated face image.

The body analysis unit 102 then sets, as a skeleton feature point, a point common to both the first candidate points and the second candidate points.

### <Method of determining face makeup area>

A face makeup area may be determined by one of or a combination of two methods (F1) and (F2) described below.
(F1) In a case where the body analysis unit 102 extracts skeleton feature points by (E1) described above, the makeup determination unit 103 determines a makeup area as follows. That is, as shown in Fig. 4, the makeup determination unit 103 determines a low light makeup area so as to include an area 314 connecting a skeleton feature point (309) below the zygomatic bone and a temple vertex 306. Furthermore, the makeup determination unit 103 determines an area 315 in the vicinity of the skeleton feature point (313) on the mandible as a highlight makeup area. Still furthermore, the makeup determination unit 103 determines an area 316 in the vicinity of the skeleton feature point (311) on the zygomatic bone as a highlight makeup area.
(F2) The makeup determination unit 103 determines highlight and lowlight makeup areas based on the user's face feature information and average or ideal face feature information.

For example, in a case where the skeleton shape of the face of the user is an inverted triangle, the makeup determination unit 103 determines a makeup area as follows.

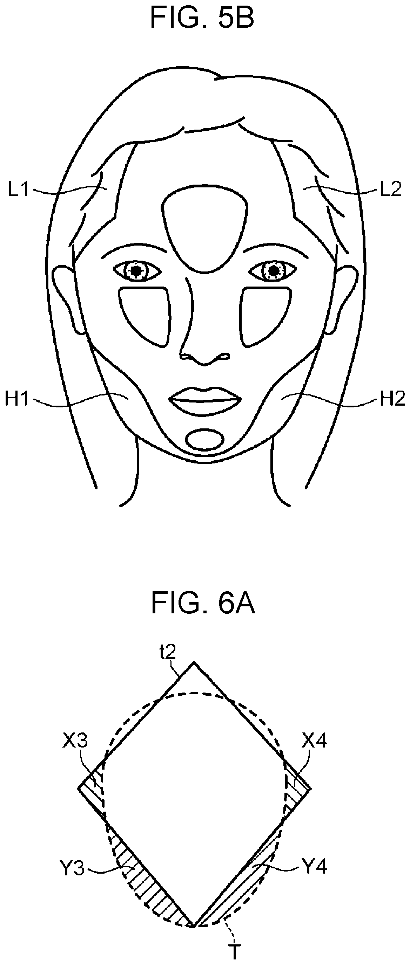

As shown in Fig. 5A, the makeup determination unit 103 compares a user's skeleton shape t1 with a reference (ideal) skeleton shape T. Next, the makeup determination unit 103 detects protruding areas X1 and X2 where the user's skeleton shape t1 protrudes from the reference skeleton shape T. Next, the makeup determination unit 103 detects insufficient areas Y1 and Y2 where the user's skeleton shape t1 is insufficient for the reference skeleton shape T. Next, as shown in Fig. 5B, the makeup determination unit 103 determines areas L1 and L2 corresponding to the protruding areas X1 and X2 in the face image as low light makeup areas. Furthermore, as shown in Fig. 5B, the makeup determination unit 103 determines areas H1 and H2 corresponding to the insufficient areas Y1 and Y2 in the face image as highlight makeup areas.

For example, in a case where the skeleton shape of the face of the user is a rhombus, the makeup determination unit 103 determines a makeup area as follows.

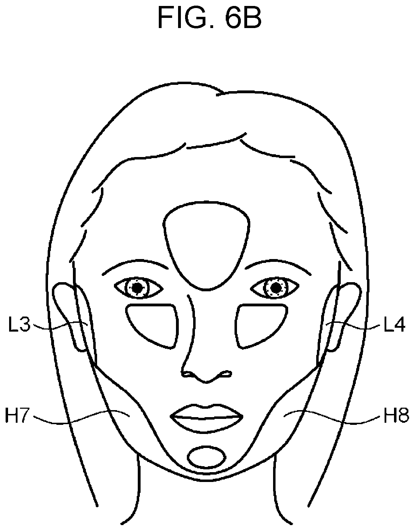

As shown in Fig. 6A, the makeup determination unit 103 compares a user's skeleton shape t2 with the reference (ideal) skeleton shape T. Next, the makeup determination unit 103 detects protruding areas X3 and X4 where the user's skeleton shape t2 protrudes from the reference skeleton shape T. Next, makeup determination unit 103 detects insufficient areas Y3 and Y4 where the user's skeleton shape t2 is insufficient for the reference skeleton shape T. Next, as shown in Fig. 6B, the makeup determination unit 103 determines areas L3 and L4 corresponding to the protruding areas X3 and X4 in the face image as low light makeup areas. Furthermore, as shown in Fig. 6B, the makeup determination unit 103 determines areas H7 and H8 corresponding to the insufficient areas Y3 and Y4 in the face image as highlight makeup areas.

### (Effects of first embodiment)

According to the first embodiment, in the makeup support apparatus 10, the body analysis unit 102 generates face feature information including skeleton feature points from a face image, and the makeup determination unit 103 determines low light and highlight makeup areas in a face and makeup colors thereof based on the skeleton feature points included in the face feature information.

The skeleton feature points are parts that are greatly different from one user to another and that can be used as reference positions in determining makeup areas or the like. Therefore, the shape of a body of a user is detected based on the skeleton of the user from the captured camera image indicating the appearance of the body of the user, and the highlight and low light makeup areas depending on each user are properly determined according to the detected body shape. Thus, it is possible to generate a makeup sheet suitable for each user. That is, an improvement in the customizability of the sheet is achieved.

Furthermore, according to the present embodiment, for example, the skeleton feature points can be determined by a relatively simple method using a camera apparatus for capturing an image of the external appearance of a body without using a large-scale apparatus for directly imaging the skeleton such as a radiation imaging apparatus.

### (Second Embodiment)

In a second embodiment, a description of a technique is given below for a case in which a makeup sheet for applying highlight and low light makeup to a leg is generated using the makeup support apparatus 10 shown in Fig. 1. Note that in a third embodiment, a description is given also for a case in which a makeup sheet for applying makeup to a body part other than the face and legs is generated.

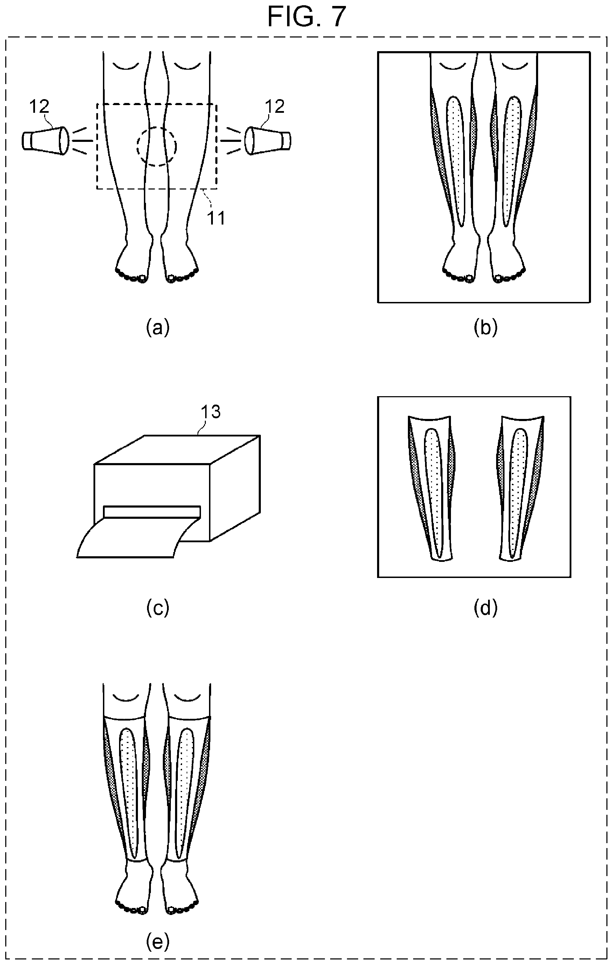

A procedure for generating a makeup sheet to be stuck to a leg is described below with reference to Fig. 7.

A user first turns the front of the leg toward the camera apparatus 11 as shown in Fig. 7(a). Note that at least one illumination apparatus 12 is disposed at a position to illuminate the legs.

Next, the image capture control unit 101 controls the illumination apparatus 12 to illuminate the leg and controls the camera apparatus 11 to capture an image of the leg from the front thereby acquiring a leg image as an example of the body image 110 from the camera apparatus 11.

Next, the body analysis unit 102 analyzes the leg image and generates leg feature information, which is an example of the body feature information 111. Here, the body analysis unit 102 analyzes the skeleton shape of the leg using the leg image, and extracts skeleton feature points of the leg.

Next, the makeup determination unit 103 determines highlight and low light makeup areas and their makeup colors suitable for the user's leg based on the skeleton shape and skeleton feature points of the leg. Noe that a method for determining the leg makeup area will be described later.

Next, the makeup image generation unit 104 generates a makeup image 114, which is an image obtained by applying highlight and low light makeup to the leg based on the makeup information 112. The makeup image generation unit 104 then displays the makeup image 114 on the display apparatus via the display control unit 108, as shown in Fig. 7(b).

The user checks the makeup image 114. In a case where the user wants to correct the makeup, the user inputs the information indicating the desired correction via the input reception unit 107. The input reception unit 107 informs the makeup determination unit 103 of the inputted correction. The makeup determination unit 103 corrects the makeup information 112 based on the content of the correction, and the makeup image generation unit 104 displays the corrected makeup image 114.

In a case where the user does not need to correct the makeup, the user inputs "confirmed" via the input reception unit 107. The input reception unit 107 informs the makeup determination unit 103 that the "confirmed" has been input. Upon receiving the information, the makeup determination unit 103 finalizes the makeup information 112.

Next, the print information generation unit 105 generates print information 113 for printing a leg makeup sheet based on the finalized makeup information 112.

Next, as shown in Fig. 7(c), the print control unit 106 controls the printing apparatus 13 to print the leg makeup sheet based on the print information 113. Thus, as shown in Fig. 7(d), the makeup sheet including the highlight and low light makeup images printed thereon is generated.

As shown in Fig. 7(e), the user attaches the makeup sheet placed on the supporting material to her/his leg such that the makeup sheet is in contact with her/his leg, and peels off the supporting material. As a result, the makeup sheet is attached to the user's leg, and the highlight makeup and the low light makeup suitable for the user's leg are applied to the user's leg.

### <Method of determining leg makeup area>

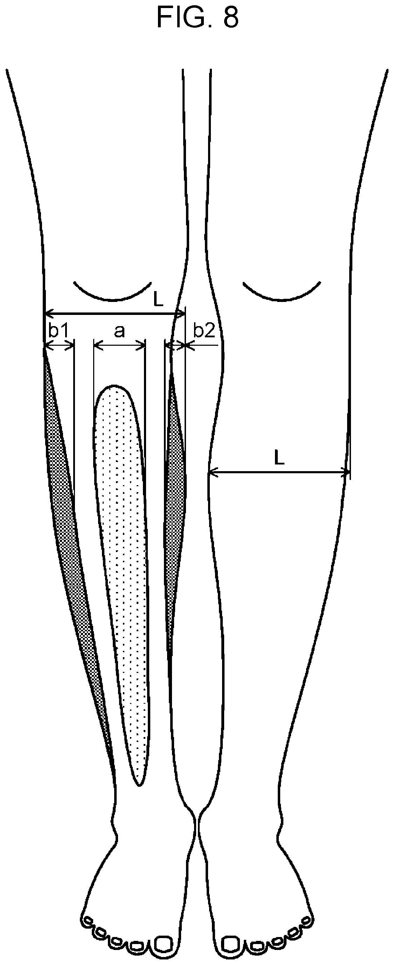

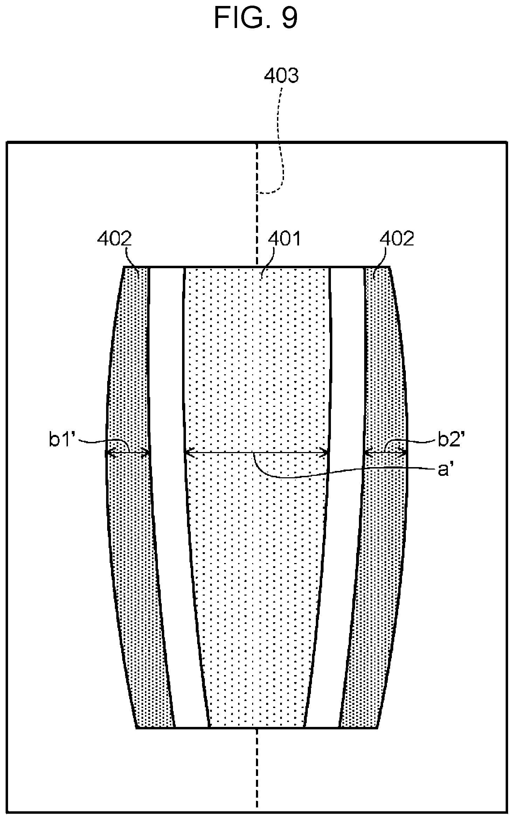

A leg makeup area may be determined by one of or a combination of two or more methods (G1) and (G3) described below.
(G1) The makeup determination unit 103 calculates a leg width L of a user based on the leg feature information, as shown in Fig. 8. Note that the leg width L may be calculated at each of a plurality of different positions on the left leg and the right leg of the user. Thereafter, based on the ideal ratios of the width of the highlight makeup area and the low light makeup area to the predetermined leg width, the makeup determination unit 103 determines the width a of the highlight makeup area and the widths b1 and b2 of the low light makeup areas in the leg width L, and incorporates the determined values into the makeup information 112.
   As shown in Fig. 9, using the makeup information 112, the print information generation unit 105 calculates a width a' of a highlight print area 401 from the width a of the highlight makeup area, and calculates widths b1' and b2' of the low light print area 402 from the width b1 and b2 of the low light make areas thereby generating print information 113.
(G2) As shown in Fig. 7(a), the image capture control unit 101 controls an illumination apparatus 12 disposed at the left side of legs to illuminate the legs from left and controls the camera apparatus 11 to capture an image of the legs thereby acquiring a leg image illuminated from left. Furthermore, the image capture control unit 101 controls an illumination apparatus 12 disposed at the right side of the legs to illuminate the legs of the user from right and controls the camera apparatus 11 to capture an image of the legs thereby acquiring a leg image illuminated from right.
   The makeup determination unit 103 determines, as highlight makeup areas, areas in which the brightness is relatively high (higher than or equal to a predetermined threshold value) in leg images illuminated from left and right.
   The makeup determination unit 103 determines, as low light makeup areas, areas in which the brightness is relatively low (lower than a predetermined threshold value) in the leg image illuminated from left and area in which the brightness is relatively low (lower than the predetermined threshold value) in the leg image illuminated from right.
(G3) The image capture control unit 101 controls the camera apparatus 11 to capture an image of a leg with a knee in an extended position thereby acquiring a leg image in a first posture. Furthermore, the image capture control unit 101 controls the camera apparatus 11 to capture an image of a leg with a knee in a bent position thereby acquiring a leg image in a second posture.

The body analysis unit 102 compares the leg image in the first posture and the leg image in the second posture to analyze a change in parts of the legs thereby determining skeleton feature points of the legs. This makes it possible for the body analysis unit 102 to more accurately determine the skeleton feature points of various parts of the legs such as knees, thighs, calve, Achilles tendons, and the like.

Using the leg feature information generated in the above-described manner, the makeup determination unit 103 determines highlight and low light makeup areas of the legs.

### <Method of determining makeup areas of other parts>

Next, a method of determining makeup areas of body parts other than the face and legs is described below.

### (Decollete neck/chest part)

The image capture control unit 101 captures an image of decollete neck/chest part of a user in a natural state thereby acquiring a decollete neck/chest part image in a first posture. Furthermore, the image capture control unit 101 capture an image of the decollete neck/chest part of the user in a state in which breasts of the user are closely lifted thereby acquiring a decollete neck/chest part image in a second posture.

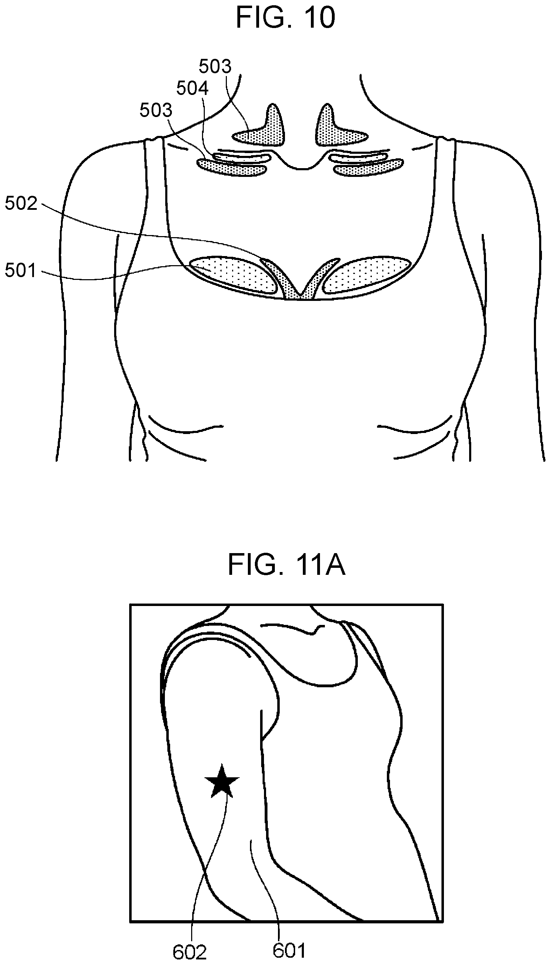

The makeup determination unit 103 compares the decollete neck/chest part image in the first posture with the decollete neck/chest part image in the second posture to extract areas where a change in shadow occurs. The makeup determination unit 103 determines extracted areas as a highlight makeup area and a lowlight makeup area. For example, as shown in Fig. 10, the makeup determination unit 103 determines, as the highlight makeup area, an area 501 where the decollete neck/chest part image in the second posture is changed to have a higher brightness than in the decollete neck/chest part image in the first posture, and, as the low light makeup area, an area 502 where the decollete neck/chest part image in the second posture is changed to have a lower brightness than in the decollete neck/chest part image in the first posture.

Thus, it is possible to generate a makeup sheet capable of providing a natural bust up visual effect when it is stuck.

### (Back)

The image capture control unit 101 capture an image of a back of a user in a natural state thereby acquiring a back image in a first posture. Furthermore, the image capture control unit 101 capture an image of the back of the user in a state in which back scapulae of the user are drawn toward each other thereby acquiring a back image in a second posture.

The makeup determination unit 103 compares the back image in the first posture with the back image in the second posture to extract areas where a change in shadow occurs. The makeup determination unit 103 determines extracted areas as a highlight makeup area and a lowlight makeup area. For example, the makeup determination unit 103 may determine, as the low light makeup area, an area where the back image in the second posture is changed to have a lower brightness than the brightness of the back image in the first posture, and determines an area in the vicinity of the determined low light makeup area as a highlight makeup area.

### (Clavicle)

The image capture control unit 101 captures an image of a clavicle in a state where both hands of a user are put down thereby acquiring a clavicle image in a first posture. Furthermore, the image capture control unit 101 captures an image of the clavicle in a state where both hands of the user are raised up thereby acquiring a clavicle image in a second posture.

The makeup determination unit 103 compares the clavicle image in the first posture with the clavicle image in the second posture to extract an area where a change in shadow occurs. Then, for example, as shown in Fig. 10, the makeup determination unit 103 determines, as a low light makeup area, an area 503 in which the clavicle image in the second posture changes to have a lower brightness than in the clavicle image in the first posture, and determines, as a highlight makeup area, an area 504 in which the clavicle image in the second posture does not have a large change in brightness compared in the clavicle image in the first posture and has a high brightness.

### (Upper Arm)

The image capture control unit 101 captures an image of an upper arm in a state in which the arm of the user is extended thereby acquiring an arm image in a first posture. The image capture control unit 101 captures an image of the upper arm in a state in which the arm of the user is bent such that a bicep is formed thereby acquiring an arm image in a second posture.

The makeup determination unit 103 compares the arm image in the first posture with the arm image in the second posture to extract an area where a change in shadow occurs. The makeup determination unit 103 determines, as a low light makeup area, an area in which the arm image in the second posture changes to have a lower brightness than in the arm image in the first posture, and determines, as a highlight makeup area, an area where the arm image in the second posture is changed to have a higher brightness than in the arm image in the first posture.

### (Body Paint)

A makeup sheet having an arbitrary design printed thereon may be attached to a body thereby achieving an effect similar to that achieved by body painting. In this case, the makeup determination unit 103 calculates the size of the body based on the body feature information 111 and enlarges or reduces the size of the design (corresponding to the makeup area) according to the calculated size.

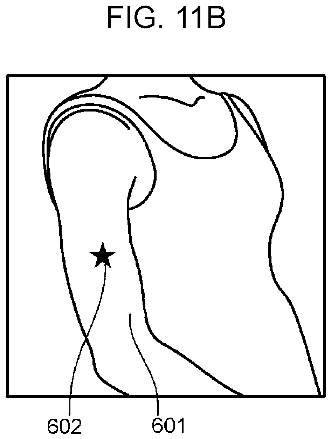

For example, as shown in Fig. 11A, in a case where an arm 601 is relatively thick, the makeup determination unit 103 enlarges the size of the design (corresponding to the makeup area) 602. Conversely, as shown in Fig. 11B, in a case where the arm 601 is relatively thin, the makeup determination unit 103 reduces the size of the design (corresponding to the makeup area) 602.

Thus, it is possible to produce a makeup sheet that provides a similar visual effect when the makeup sheet is attached regardless of a difference in body feature of the user (for example, a height, a body type, and the like).

### (Using makeup Images of other people)

Highlight and low light makeup areas may also be determined using makeup images of other persons (for example, makeup images of models or actresses) having (ideal) appearances the user likes. In this case, in addition to the process of extracting the skeleton feature points of the user, the body analysis unit 102 extracts the body feature information of the other person (which may include the skeleton feature points) from the makeup image of the other person. Furthermore, the body analysis unit 102 extracts highlight and low light makeup areas and makeup colors from the makeup image of the other person. The makeup determination unit 103 then converts (for example, enlarges or reduces) the makeup areas extracted from the makeup image of the other person into makeup areas suitable for the body of the user based on the difference between the body feature information of the other person and the body feature information 111 of the user (for example, enlargement or reduction) thereby generating makeup information 112. The print information generation unit 105 generates print information 113 from the generated makeup information 112, and the print control unit 106 generates a makeup sheet from the generated print information 113.

This makes it possible to generate a makeup sheet that, when attached to the body, gives an impression of the same appearance as that of the other (ideal) person that the user likes.

### (Effects of second embodiment)

According to the second embodiment, in the makeup support apparatus 10, the body analysis unit 102 generates leg feature information including skeleton feature points from a leg image, and the makeup determination unit 103 determines low light and highlight makeup areas in the leg based on the skeleton feature points included in the leg feature information.

The makeup support apparatus 10 may also determine low light and highlight makeup area for another body part using an image of this body part of the user instead of the leg image in a similar manner as with the case of the leg image.

This allows the makeup support apparatus 10 to generate a makeup sheet that can provide low light and highlight makeup suitable for the body feature of the legs or other body parts of the individual user.

### (Third Embodiment)

A third embodiment is described below for a case in which a makeup sheet having a component for stimulating an acupoint of a body (hereinafter referred to as an "acupoint stimulus component") is produced by using the makeup support apparatus 10 shown in Fig. 1. The acupoint stimulus component may be printed on the sheet together with an ink that provides a visual effect such as that described in the above embodiments.

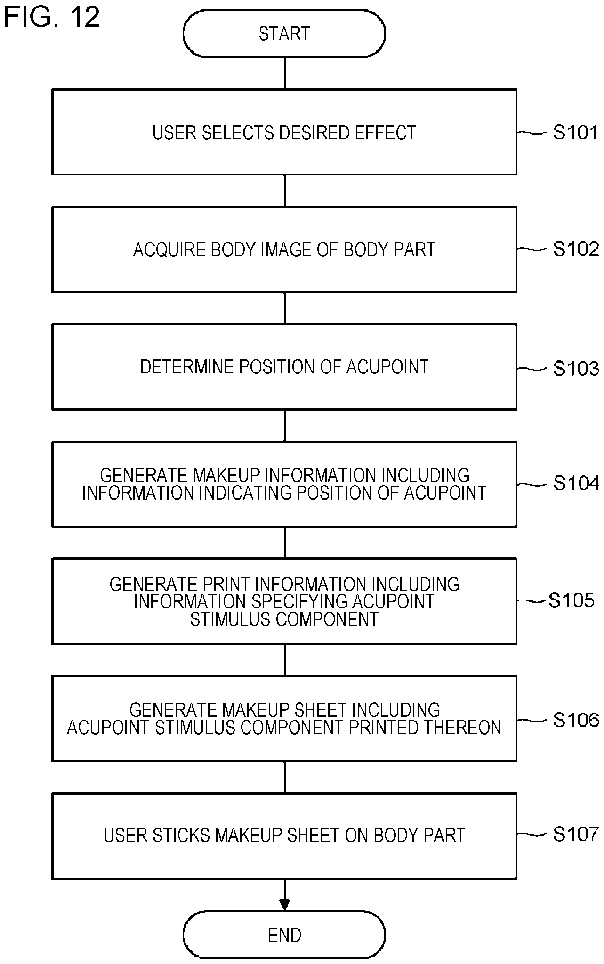

Next, a procedure for printing an acupoint stimulus component on a sheet will be described below with reference to a flowchart shown in Fig. 12.

First, a user selects at least one desired effect via the input reception unit 107 (S101). For example, the user may select at least one effect from among the following: promoting face tenseness, countermeasures against dullness of the face, reducing eye strain, small face, aging care, removing wrinkles, removing slack, removing swelling, increasing appetite, suppressing appetite, countermeasures against cold-sensitive constitution, and relaxing.

Next, the image capture control unit 101 determines a body part where an acupoint corresponding to the effect selected in S101 exists, and captures an image of the determined body part thereby acquiring the body image 110 (S102). Note that the correspondence between the efficacy and the acupoint may be defined in advance.

Next, the body analysis unit 102 determines a position of the acupoint from the body image 110 in S102 (S103).

Next, the makeup determination unit 103 determines the makeup area at the position of the acupoint corresponding to the effect selected in S101, and generates makeup information 112 (S104).

Next, the print information generation unit 105 generates print information 113 for printing an ink containing an acupoint stimulus component in a print area corresponding to the makeup area (that is, the position of the acupoint) indicated in the makeup information 112 (S105).

Next, based on print information 113 in S105, the print control unit 106 prints ink containing an acupoint stimulus component in a print area on the side of the sheet that will come into contact with the skin thereby generating a makeup sheet (S106).

Next, the user attaches the makeup sheet generated in S106 to the body part determined in S102 (S107).

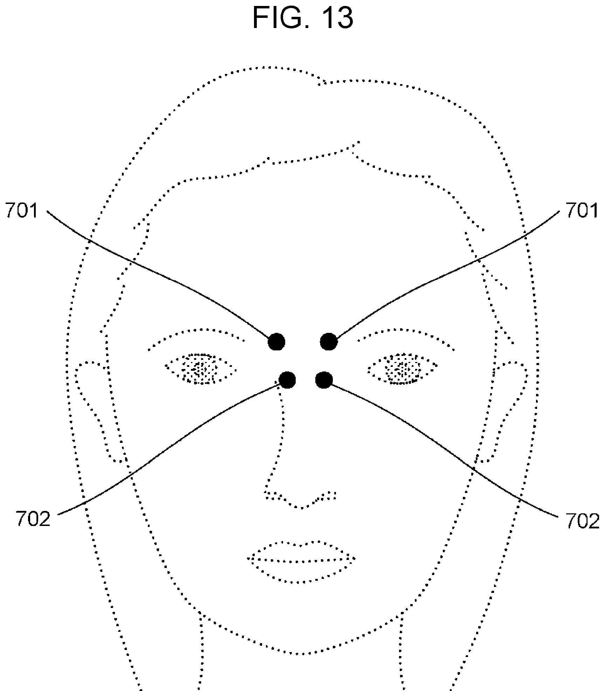

For example, in order to enhance face tension, prevent dullness, and reduce eyestrain, as shown in Fig. 13, it is effective to stimulate an acupoint of a largely concave portion 701 at an inner end of an eyebrow and a concave portion 702 of a bone between an inner corner of an eye and a nose. Therefore, in a case where the user selects the enhancement of the face tension, the countermeasure against the dullness of the face, or the reduction in eyestrain in S101, the makeup support apparatus 10 operates as follows.

In S102, the image capture control unit 101 instructs the user to capture a face image. In S103, the body analysis unit 102 determines positions 701 and 702 of the acupoints shown in Fig. 13 from the face image of the user. In S104, the makeup determination unit 103 determines acupoint positions 701 and 702 shown in Fig. 13 as a makeup area for printing the acupoint stimulus component. In S105, the print information generation unit 105 generates print information 113 for printing the ink containing the acupoint stimulus component on the print areas corresponding to the makeup areas, that is, the areas that will be in contact with the acupoint positions 701 and 702 when the makeup sheet is attached to the face.

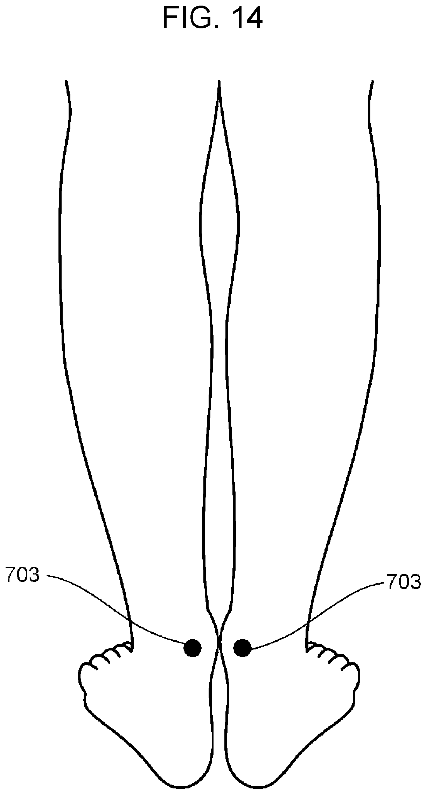

For example, as a countermeasure against cold-sensitive constitution, as shown in Fig. 14, it is effective to stimulate an acupoint (Tai Xi) in the middle part 703, which is slightly recessed between the Achilles tendon and slightly behind the height of the inner ankle. Therefore, in a case where the user selects the countermeasure against cold-sensitive constitution in S101, the makeup support apparatus 10 operates as follows.

In S102, the image capture control unit 101 instructs the user to capture an image of an inner ankle of a leg. In S103, the body analysis unit 102 determines an acupoint position 703 shown in Fig. 14 from the image of the inner ankle of the leg of the user. In S104, the makeup determination unit 103 determines an area at the acupoint position 703 shown in Fig. 14 as a makeup area in which the acupoint stimulus component is to be printed. In S105, the print information generation unit 105 generates print information 113 for printing the ink containing the acupoint stimulus component on the print area corresponding to the determined makeup area, that is, the area that is to be in contact with the acupoint position 703 when the makeup sheet is attached to the inner ankle part.

The thickness and the material of the sheet used in the present embodiment are not limited to those described above in the first embodiment.

The acupoint stimulus component may be a magnetic substance. In this case, the print information generation unit 105 may generate the print information 113 for printing wiring connected to the print area of the magnetic material. In this case, a current may be applied to the wiring printed on the makeup sheet such that the magnetic material generates a magnetic field thereby stimulating the acupoint.

The acupoint stimulus component may be a component that provides a warm stimulus. Examples of components that provide a warm stimulus include a pepper extract, a capsaicin extract, vanillyl amide nonylate, nicotinic acid ester and the like.

Alternatively, instead of or together with the acupoint stimulus component, a thick multilayer of a resin may be printed on the sheet at a position corresponding to the acupoint so as to form a convex shape. This makes it possible to produce a makeup sheet that physically stimulates (presses) the position of the acupoint.

### (Effects of third embodiment)

In the third embodiment, the makeup support apparatus 10 operates such that the body analysis unit 102 determines the position of the acupoint from the body image 110 of the user, the makeup determination unit 103 determines this position of the acupoint as the makeup area, and the print information generation unit 105 generates print information 113 for printing the ink containing the acupoint stimulus component in the makeup area.

Thus, it is possible to generate the makeup sheet on which the acupoint stimulus component is printed at the position suitable for the body feature of each user.

The technique disclosed in the present embodiment may be incorporated into at least one system of the first and second embodiments thereby achieving the generation of a makeup sheet that provides both a visual correction effect and an effect that actually acts on the body.

### (Fourth Embodiment)

In a fourth embodiment, a description is given below as to a method of sticking a makeup sheet generated using the makeup support apparatus 10 shown in Fig. 1 to a skin.

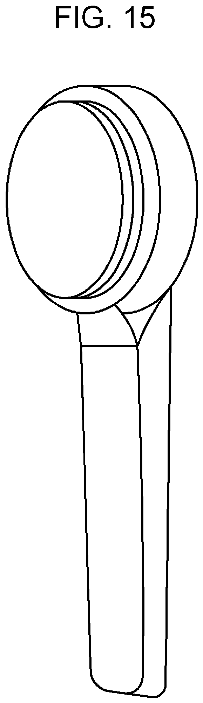

The makeup sheet may be attached to the skin by one of methods (H1) to (H6) described below.
(H1) After the user attaches the makeup sheet to the skin, the user sprays a mist of water on the attached portion. As a result, the makeup sheet can be more closely adhered to the skin. Instead of spraying a water mist, a sponge containing water may be pressed against the attached portion. According to this attaching method, the makeup sheet is firmly attached to the skin.
(H2) The user sprays a mist of water on the makeup sheet and waits until moisture spreads evenly on the makeup sheet. The user then attaches the makeup sheet to the skin. The waiting time may be, for example, 10 to 60 seconds. Note that user may spray a mist of water on the skin and then the user may attach the makeup sheet to that part. Instead of spraying a water mist, a sponge containing water may be pressed against the skin. This attaching method makes it easy to perform an operation of attaching the makeup sheet to the skin.
(H3) A cut line 403 (see Fig. 9) is provided along a center line on a substrate of a makeup sheet. The user brings the makeup sheet into close contact with the skin while opening the mount at the cut line 403 to left and right. According to this attaching method, it is possible to reduce a positioning error when the makeup sheet is attached to the skin. That is, the user can easily attach the makeup sheet at the correct position. This attaching method is more effective when the makeup sheet is attached to a relatively large area such as a decollete neck/chest area or a leg.
(H4) The user attaches the makeup sheet to the skin using a device for assisting the sticking of the makeup sheet (hereinafter, referred to as a "stick assist device"). For example, as shown in Fig. 15, the stick assist device has a structure for holding and pressing a makeup sheet against a skin to stick the makeup sheet to the skin. This sticking method makes it easy to perform an operation of sticking the makeup sheet to the skin. That is, the handleability of the sheet is improved.
(H5) Images of a plurality of relatively relevant makeup parts are printed on one sheet, and cut lines are provided in contours of these makeup parts. For example, images of a plurality of makeup parts to be stuck to a face are printed on one sheet. Alternatively, as shown in Fig. 7(d), makeup parts of both legs are printed on one sheet. According to this sticking method, the positional relationship between the makeup parts can be easily understood and thus the user can stick the makeup parts to correct positions.
(H6) After the user sticks a first makeup sheet to a skin, the user further sticks a second makeup sheet to the first makeup sheet. For example, the user sticks a shadow sheet that emphasizes a shadow on top of the first makeup sheet. According to this sticking method, the user can easily adjust the finish of the makeup.

### (Effects of fourth embodiment)

According to the sticking method described in the fourth embodiment, it becomes possible to facilitate an operation of sticking the makeup sheet to the skin.

### (Fifth Embodiment)

In a fifth embodiment, an eyebrow sheet suitable for a user's face is generated using skeleton feature points of a face image.

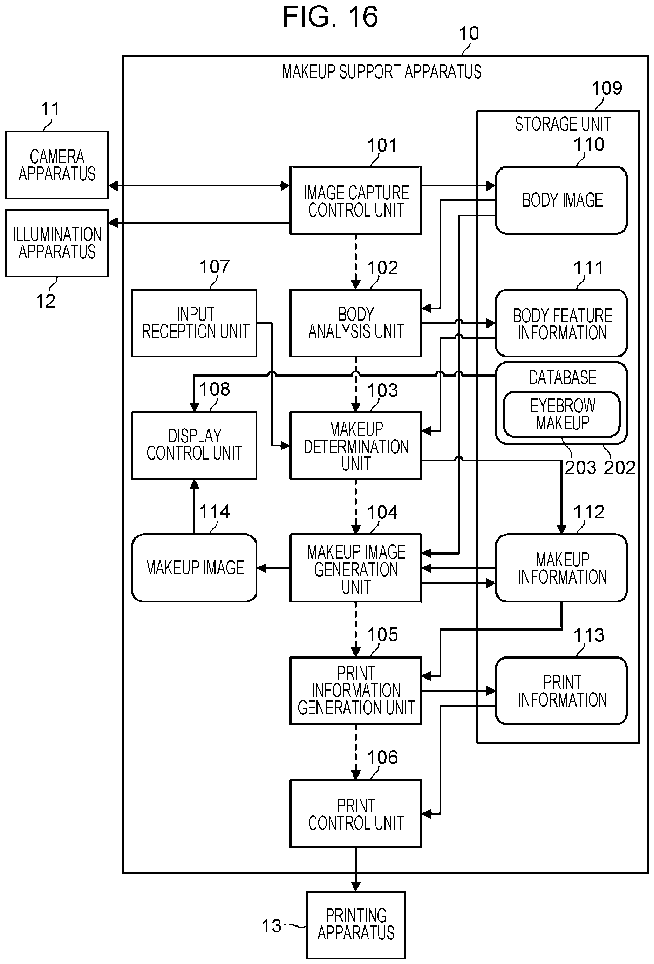

A procedure for producing an eyebrow sheet is described below with reference to Fig. 16. Note that a description of the same parts as those described in the first embodiment is omitted.

A user turns the front of the user's face toward the camera apparatus 11. Note that at least one illumination apparatus 12 is disposed at a position so as to illuminate the face.

Next, the image capture control unit 101 controls the illumination apparatus 12 so as to illuminate the face and controls the camera apparatus 11 so as to capture an image of the face from the front thereby capturing a face image, which is an example of the body image 110, from the camera apparatus 11. In this process, the user is instructed to look straight at the camera apparatus 11.

Next, the body analysis unit 102 analyzes the face image and generates face feature information, which is an example of the body feature information 111. Here, the body analysis unit 102 analyzes a skeleton shape around a chin and eyebrows using the face image, and extracts skeleton feature points around the chin and eyebrows. Furthermore, the body analysis unit 102 acquires positions and shapes of eyes, a nose, and irises.

Next, the makeup determination unit 103 determines eyebrow makeup areas suitable for the user's face, using the skeleton feature points around the chin and the eyebrows, the positions and shapes of the eyes, the nose, and irises. Note that a method of determining the eyebrow makeup areas will be described later.

The storage unit 109 stores a database 202. Next, the user selects a preferred eyebrow makeup 203 from the database 202 displayed via the display control unit 108. The database 202 stores various types of eyebrow makeups 203 as examples. Each eyebrow makeup 203 has a different shape, such as a parallel eyebrow, a mountain-shaped eyebrow, a thick eyebrow, a thin eyebrow, and/ or has a different color. Note that the selection of the eyebrow makeup 203 by the user is not necessarily performed after the image capturing and the body analysis are performed, but may be performed at any stage before this.

Next, the makeup image generation unit 104 generates a makeup image 114, which is an image obtained by applying the eyebrow makeup to the face image based on the makeup information 112. The makeup image generation unit 104 then displays the makeup image 114 on the display apparatus via the display control unit 108.

The user checks this makeup image 114. If the user wants to correct the makeup, the user inputs information specifying the correction via input accepting section 107. The input reception unit 107 informs the makeup determination unit 103 of the inputted correction. The makeup determination unit 103 corrects the makeup information 112 based on the content of the correction, and the makeup image generation unit 104 displays the corrected makeup image 114.

In a case where the user does not need to correct the makeup, the user inputs "confirmed" via the input reception unit 107. The input reception unit 107 informs the makeup determination unit 103 that the "confirmed" has been input. Upon receiving the information, the makeup determination unit 103 finalizes the makeup information 112.

Next, the print information generation unit 105 generates print information 113 for printing an eyebrow makeup sheet based on the finalized makeup information 112.

Next, the print control unit 106 controls the printing apparatus 13 to print the eyebrow makeup sheet based on the print information 113. Thus, a makeup sheet on which the eyebrow makeup to be applied to the eyebrows is printed is generated.

The user attaches the makeup sheet placed on the substrate to the user's eyebrow such that the side of the makeup sheet is in contact with the user's eyebrow, and peels off the substrate. As a result, the makeup sheet is stuck to the user's eyebrow part, and the eyebrow makeup suitable for the user is applied to the user's eyebrow.

### <Method for determining eyebrow makeup area>

The eyebrow makeup area is determined using one of or a combination of two methods (11) and (12) described below.

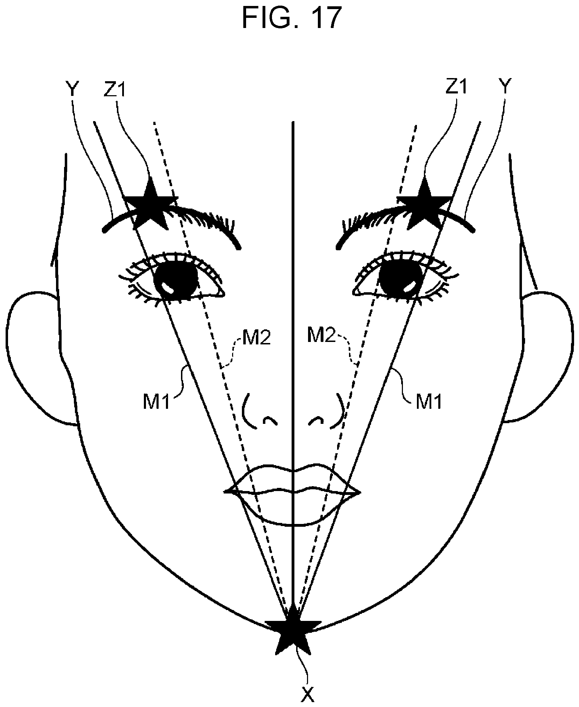

(I1) As shown in Fig. 17, the makeup determination unit 103 acquires a center point X of a user's jaw based on skeleton feature points of the jaw. Furthermore, the makeup determination unit 103 acquires a curve Y on which the eyebrow makeup is to be put based on the skeleton feature points around the eyebrow. Then, the makeup determination unit 103 determines an intersection of the curve Y with an area formed between two straight line M1 and a straight line M2 wherein the straight line M1 extends from the center point X to an outer end of the iris and the straight line M2 extends from the center point X to an inner end of the iris. This intersection is determined as the position Z1 of the top of the eyebrow.

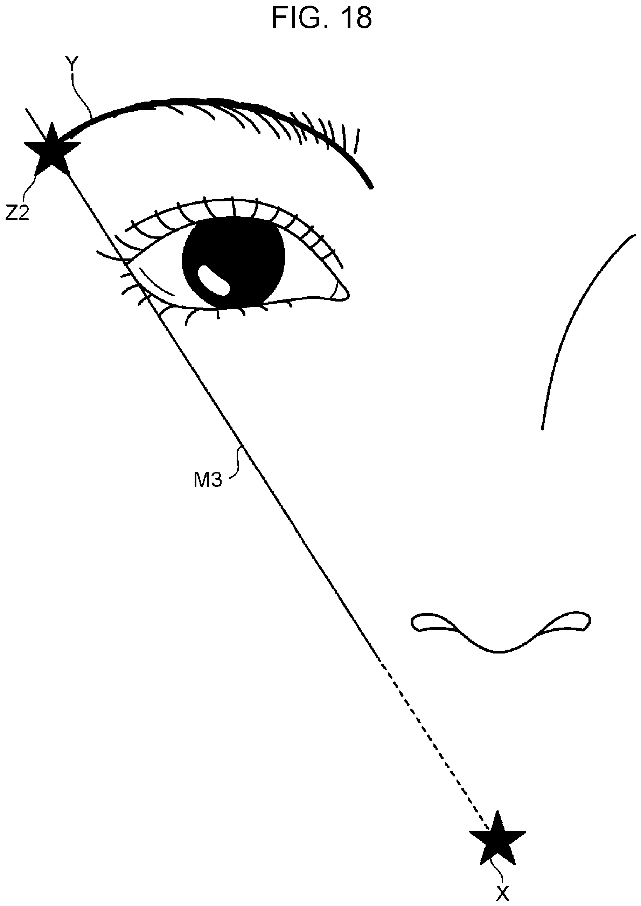

Next, as shown in Fig. 18, the makeup determination unit 103 determines an intersection of the curve Y with a straight line M3 extending from an outer end of a nostril toward an outer corner of the eye, and employed the determined intersection as a position Z2 of an outer corner of the eyebrow.

Next, the makeup image generation unit 104 adjusts the shape of the eyebrow makeup 203 selected by the user such that the shape fits the position Z1 of the top of the eyebrow and the position Z2 of the outer corner of the eyebrow. The makeup image generation unit 104 outputs the result as the makeup image 114.

(I2) The image capture control unit 101 controls the illumination apparatus 12 disposed at least above the face to illuminate the face from above, and controls the camera apparatus 11 to capture an image of the face thereby acquiring a face image. In addition to the illumination apparatus 12 disposed above the face, an additional illumination apparatus may be disposed below the face and/or at the left and right sides.

Next, the makeup determination unit 103 acquires, as the curve Y where the eyebrow makeup is to be placed, a boundary area between an area where the brightness around the eyebrows is relatively high (higher than or equal to a predetermined threshold value) and an area where a shadow is formed which causes the brightness around the eyebrow to be low (lower than or equal to a predetermined threshold value) in the face image illuminated by the illumination unit. Then, the makeup determination unit 103 determines an intersection of the curve Y with an area formed between two straight line M1 and a straight line M2 wherein the straight line M1 extends from the center point X to an outer end of the iris and the straight line M2 extends from the center point X to an inner end of the iris. This intersection is determined as the position Z1 of the top of the eyebrow.

Next, as shown in Fig. 18, the makeup determination unit 103 determines the intersection of the curve Y with a straight line M3 drawn from the outside of the nose toward the outer corner of the eye as the position Z2 of the outer corner of the eyebrow.

Next, the makeup image generation unit 104 adjusts the shape of the eyebrow makeup 203 selected by the user so as to match the position Z1 of the top of the eyebrow and the position Z2 of the outer corner of the eyebrow thereby determining the shape of the eyebrow makeup suitable for the user. The makeup image generation unit 104 outputs the result as the makeup image 114.

### (Sixth Embodiment)

In a sixth embodiment, an eyebrow sheet suitable for the user's face is generated by using skeletal feature points of the face image.

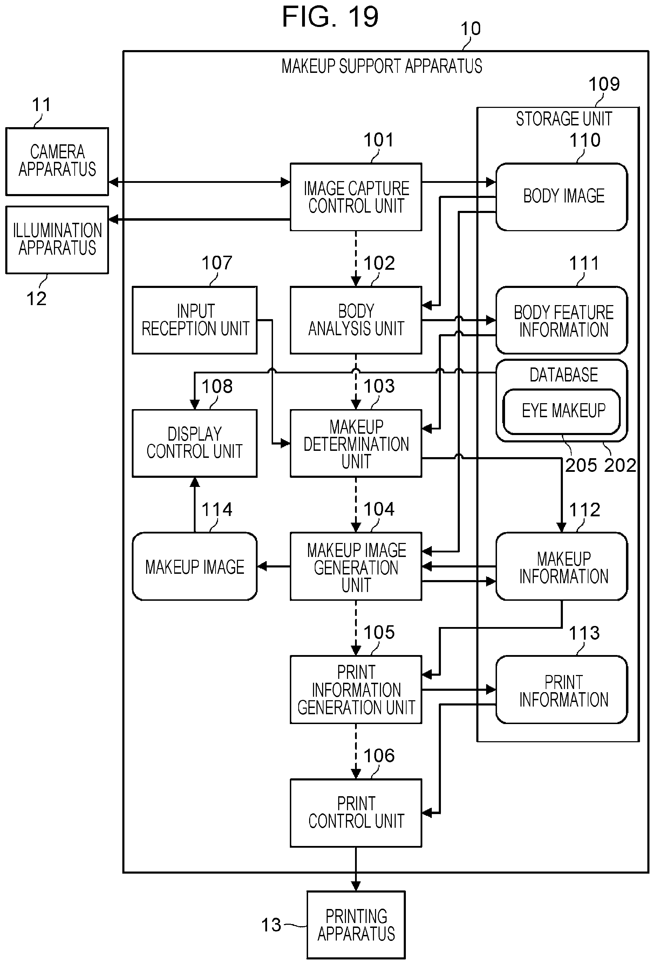

With reference to Fig. 19, a procedure for producing an eye makeup sheet is described below. Note that a description of the same parts as those described in the first embodiment is omitted.

First, a user turns the front of the user's face toward the camera apparatus 11. Note that at least one illumination apparatus 12 is disposed at a position so as to illuminate the face.

Next, the image capture control unit 101 controls the illumination apparatus 12 so as to illuminate the face and controls the camera apparatus 11 so as to capture an image of the face from the front thereby capturing a face image, which is an example of the body image 110, from the camera apparatus 11. In this process, the user is instructed to look straight at the camera apparatus 11.

Next, the body analysis unit 102 analyzes the face image and generates face feature information, which is an example of the body feature information 111. Here, the body analysis unit 102 analyzes the skeleton shape of the jaw using the face image, and extracts skeleton feature points of the jaw. Furthermore, the body analysis unit 102 acquires positions and shapes of eyes and a nose.

Next, the makeup determination unit 103 determines an eye makeup area suitable for the user's face by using the skeleton feature points of the jaw, the positions and shapes of the eyes and nose. Note that a method of determining the eye makeup area will be described later.

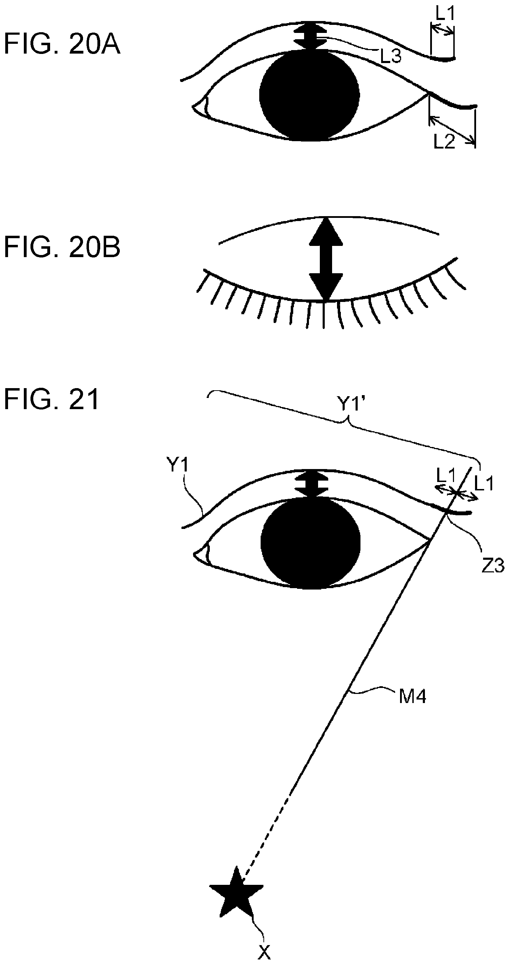

The storage unit 109 stores a database 202. Next, the user selects a preferred eye makeup 205 from the database 202 displayed via the display control unit 108. The database 202 stores various types of eye makeups 205 as examples. Each eye makeup 205 differs in line shape and/or color of, for example, double eyelid lines, eye lines, eye shadows, and the like. For example, the eye makeup 205 for a double eyelid line differs in the width L3 of the double eyelid line when the eye is opened, the extension length L1 in the positive and negative directions with respect to the outer corner of the eye, and the shape as shown in Fig. 20 A. As shown in Fig. 20 A, the eye makeup 205 relating to the eye line differs in extension length L2 from the outer corner of the eye and a shape. Variations in the shape of the extension length L2 of the eye line from the outer corner of the eye include, for example, a flip-up shape, a sagging eye shape, and the like.

Note that the selection of the eyebrow makeup 203 by the user is not necessarily performed after the image capturing and the body analysis are performed, but may be performed at any stage before this.

Next, the makeup image generation unit 104 generates a makeup image 114, which is an image obtained by applying the eye makeup to the face image based on the makeup information 112. The makeup image generation unit 104 then displays the makeup image 114 on the display apparatus via the display control unit 108.

The user checks the makeup image 114. In a case where the user wants to correct the makeup, the user inputs the information indicating the desired correction via the input reception unit 107. The input reception unit 107 informs the makeup determination unit 103 of the inputted correction. The makeup determination unit 103 corrects the makeup information 112 based on the content of the correction, and the makeup image generation unit 104 displays the corrected makeup image 114.

In a case where the user does not need to correct the makeup, the user inputs "confirmed" via the input reception unit 107. The input reception unit 107 informs the makeup determination unit 103 that the "confirmed" has been input. Upon receiving the information, the makeup determination unit 103 finalizes the makeup information 112.

Next, the print information generation unit 105 generates print information 113 for printing an eye makeup sheet based on the finalized makeup information 112.

Next, as shown in Fig. 7(c), the print control unit 106 controls the printing apparatus 13 to print the eye makeup sheet based on the print information 113. Thus, a makeup sheet on which the eye makeup to be applied to the eye is printed is generated.

The user sticks the makeup sheet put on the substrate to the side of the user's eye and peels off the substrate. As a result, the makeup sheet is stuck to the side of the eye of the user, and the makeup suitable for the user is applied to the eye of the user.

Note that when the user checks the determined eye makeup image 114, the face of the user may be illuminated by changing the illuminance, the color, and/or the temperature of the illumination unit (not shown) in a state in which the eye makeup determined by the user is displayed such that it is superimposed on the face image of the user. This allows the user to check what color, expression, and impression will be obtained when the eye makeup is actually applied.

### <Method of determining eye makeup area>

The eye makeup area is determined using one of or a combination of two or more methods (J1) and (J3) described below.

### (J1) Method of determining shape of double eyelid line

The user is instructed to open and close her/his eyes. The makeup determination unit 103 acquires the position and shape of the double eyelid line from an upper eye line when the eyes are opened, and determines the curve Y1 where the double eyelid line is to be put as shown in Fig. 21.

Next, the makeup determination unit 103 acquires the center point X of the user's jaw based on the skeletal feature points of the jaw, as shown in Fig. 17.

Next, as shown in Fig. 21, the makeup determination unit 103 determines, as the reference line Y1' of the double eyelid line, a curve extended by L1 along the line of the curve Y1 from an intersection Z3 of the curve Y1 and a straight line M4 drawn from the center point X toward the outside of the corner of the eye. Note that the extended length L1 may be in a direction toward the eyebrow (negative L1) or in a direction away from the eyebrow (positive L1).

Next, the makeup determination unit 103 adjusts the shape of the eye makeup 205 selected by the user so as to fit the curve Y1' thereby determining the shape of the double eyelid line suitable for the user. The makeup image generation unit 104 outputs the result as the makeup image 114.

### (J2) Method of determining shape of eye line

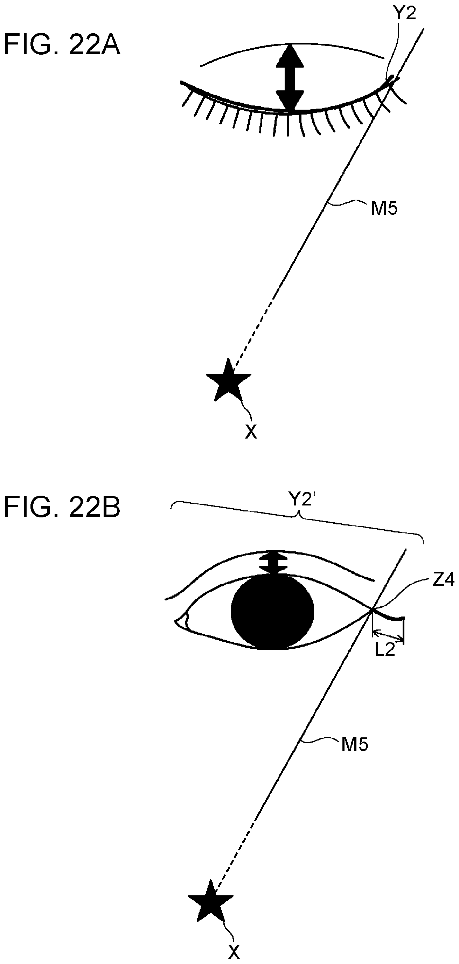

The user is instructed to open and close the eyes. The makeup determination unit 103 acquires the position and shape of the double eyelid line from the upper line of the eye in the state in when the eye is opened, as shown in Fig. 22B, and determines the shape of the curve Y2 where the eye line is to be placed from the line of the eyelid in when the eye is closed as shown in Fig. 22A.

Next, as shown in Fig. 17, the makeup determination unit 103 acquires the center point X of the user's jaw based on the skeleton feature points of the jaw.

Next, as shown in Fig. 22B, the makeup determination unit 103 determines, as the reference line Y2' of the eye line, a curve extending by a distance L2 along the line of Y2 from an intersection Z4 between the curve Y2 and a line M5 drawn from the center point X toward the outer corner of the eye.

Next, the makeup determination unit 103 adjusts the shape of the eye makeup 205 selected by the user so as to fit the curve Y2' thereby determining the shape of the eye line suitable for the user. The makeup image generation unit 104 outputs the result as the makeup image 114.

The eye line may have a gradation of a color. For example, the eye line may have a gradation that gradually darkens toward the center based on the position information in terms of the outer corner of the eye, the inner corner of the eye, and the center of the eye obtained from the skeleton feature points of the jaw, the positions and the shapes of the eyes and the nose. Alternatively, the eye line may have a gradation that gradually darkens toward the outer corner of the eye.

### (J3) Method of determining eye shadow area

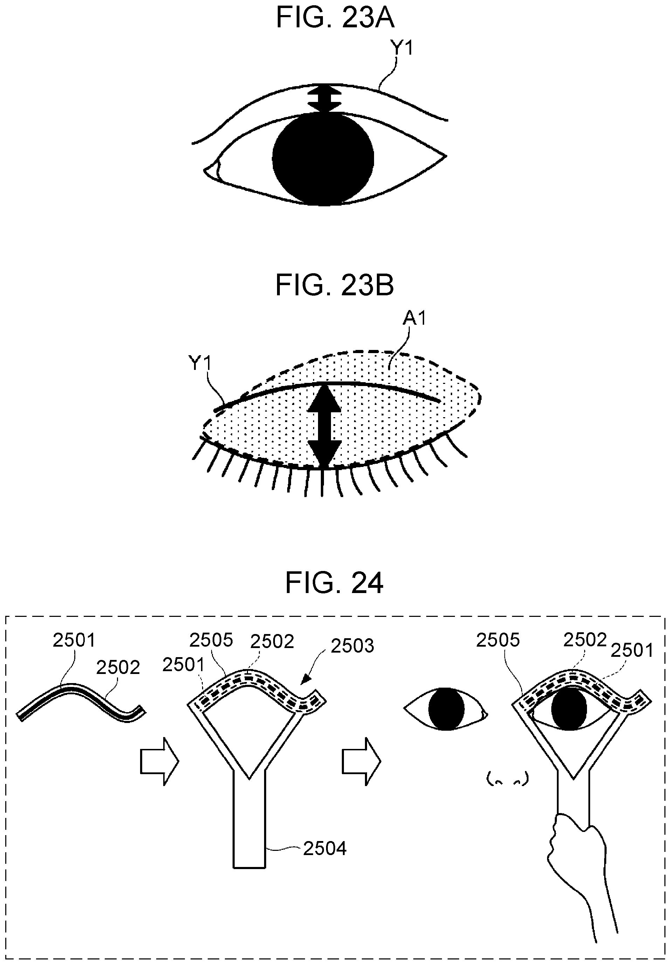

The user is instructed to open and close the eyes. The makeup determination unit 103 acquires the position and shape of the double eyelid line from an upper eye line when the eyes are opened, and determines the curve Y1 where the double eyelid line is to be put as shown in Fig. 23A. Furthermore, as shown in Fig. 23B, the makeup determination unit 103 determines, from the shape of the eye hole and the position of the curve Y1 in a state in which the eye is closed, a shape obtained by extending the shape of the eye hole up to the curve Y1, and employs the determined shape as an eye shadow area A1.

Next, as shown in Fig. 17, the makeup determination unit 103 acquires the center point X of the user's jaw based on the skeleton feature points of the jaw.

Next, the makeup determination unit 103 adjusts the shape of the eye makeup 205 selected by the user so as to fit the area A1 thereby determining the shape of the eye shadow suitable for the user. The makeup image generation unit 104 outputs the result as the makeup image 114.

When the makeup determination unit 103 determines the width in the direction from the eye to the eyebrow in the eye makeup image, the makeup determination unit 103 may calculate the depth of the carving and the depression in the upper part of the eye (in other words, the skeleton feature around the eye). For example, in order to make it easy to detect the skeleton around the eye, the image capture control unit 101 illuminates the user's face at a predetermined angle from above the face, and captures the body image 110. Then, the makeup determination unit 103 analyzes (calculates) the skeleton feature around the eye from the width of a shadow.

### <Method of sticking eye makeup sheet>

The eye makeup area is a small and long area compared with the makeup applied to cheeks or legs. Therefore, it is difficult to stick the makeup sheet beautifully to a desired position.

To handle the above situation, an example of a method of attaching a makeup sheet on which an eye line image is printed is described below with reference to Fig. 24. Note that the basic configuration and the sticking method are the same as those described above with reference to Fig. 15 in the fourth embodiment.

Fig. 24 shows a makeup sheet 2501 on which an eye line image is printed, a sheet sticking substrate 2502, and a sticking assist apparatus 2503. The makeup sheet 2501 is put in contact with one surface of the sheet sticking substrate 2502.

The sticking assist apparatus 2503 has a grip part 2504 and a support part 2505. The support part 2505 has a shape for supporting both ends in the longitudinal direction of the makeup sheet 2501 of the eye line. The support part 2505 may be configured to have a shape for supporting the makeup sheet 2501 at two or more points. For example, the support part 2505 may have a shape for supporting the makeup sheet 2501 at three points by a three-pronged shape. Next, two examples of sticking methods are described.

### <First sticking method>

(Step 1) The user holds the grip part 2504 by hand, presses the support part 2505 against the other surface of the sheet sticking substate 2502 (a surface with which the makeup sheet 2501 is not in contact), and sticks the sheet sticking mount 2502 including the makeup sheet 2501 to the support part 2505. The user lifts the sticking assist apparatus 2503.

(Step 2) The user presses the support part 2505 against the eye (eye line) while watching her/his own face displayed on the mirror or on the display unit of the image processing apparatus, and sticks only the makeup sheet 2501 on her/his face.

(Step 3) After sticking the makeup sheet 2501, the user removes the sheet sticking substrate 2502 remaining on the support part 2505 (manually) with a finger or the like.

Thus, the sticking assist apparatus 2503 can be repeatedly used. The surface of the support part 2505 of the sticking assist apparatus 2503 may be processed into a hook shape. Alternatively, an adhesive may be applied to the other surface of the sheet sticking substrate 2502 or the surface of the support part 2505. In either case, in step 1, the sheet sticking substrate 2502 is stuck to the support part 2505.

### <Second sticking method>

(Step 1) The user presses the support part 2505 against one surface (a surface with which the makeup sheet 2501 is in contact) of the sheet sticking substrate 2502, and sticks only the makeup sheet 2501 to the support part 2505. The user lifts the sticking assist apparatus 2503.

(Step 2) The user presses the support part 2505 against the eye (eye line) and sticks the makeup sheet 2501 on the face. The surface of the support part 2505 may be subjected to hydrophilic processing. In a case where the makeup sheet 2501 is subjected to the hydrophilic processing and sticking of the makeup sheet 2501 is performed using water, it is preferable, for example, to press the makeup sheet 2501 against a moisture-containing sponge so as to uniformly supply water to the entire surface and then press the makeup sheet 2501 against the skin. This is because the makeup sheet 2501 has a long and narrow shape and thus, if water is sprayed by an atomizer or the like, a wind pressure may cause the makeup sheet 2501 to move on the support part 2505.

Although the embodiments of the present disclosure have been described in detail with reference to the drawings, the function of the makeup support apparatus 10 described above may be realized by a computer program.

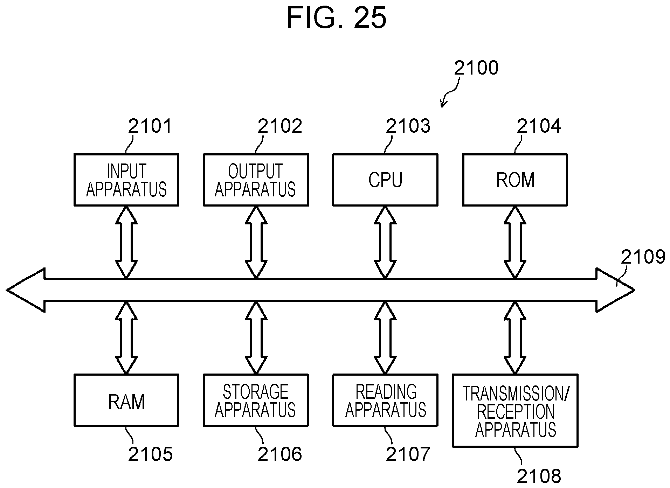

Fig. 25 is a diagram illustrating a hardware configuration of a computer for realizing the function of the makeup support apparatus 10 by a program. The computer 2100 includes an input apparatus 2101 such as a keyboard or a mouse or a touch pad, an output apparatus 2102 such as a display or a speaker, a CPU (Central Processing Unit) 2103, a ROM (Read Only Memory) 2104, a RAM (Random Access Memory) 2105, a storage apparatus 2106 such as a hard disk apparatus or an SSD (Solid State Drive), a reading apparatus 2107 for reading information from a storage medium such as a DVD-ROM (Digital Versatile Disk Read Only Memory) or a USB (Universal Serial Bus) memory, and a transmission/reception apparatus 2108 for performing communication via a network. These units are connected via a bus 2109.

The reading apparatus 2107 reads programs from the storage medium on which the program for realizing the functions of the respective apparatus described above are stored, and stores the programs in the storage apparatus 2106. Alternatively, the transmission/reception apparatus 2108 may communicate with a server apparatus connected to a network to download the program for realizing the function of the makeup support apparatus 10, and may store the downloaded program in the storage apparatus 2106.

The CPU 2103 then copies the program stored in the storage apparatus 2106 into the RAM 2105, and sequentially reads instructions included in the program from the RAM 2105 and executes them thereby realizing the function of the makeup support apparatus 10.

### Industrial applicability

The body appearance correction support apparatus, the body appearance correction support method, and the computer program according to the present disclosure can support a user to change a body appearance using a sheet attachable to a body.

### Reference Signs List

- 10: makeup support apparatus
- 11: camera apparatus
- 12: illumination apparatus
- 13: printing apparatus
- 101: image capture control unit
- 102: body analysis unit
- 103: makeup determination unit
- 104: makeup image generation unit
- 105: print information generation unit
- 106: print control unit
- 107: input reception unit
- 108: display control unit
- 109: storage unit
- 110: body image
- 111: body feature information
- 112: makeup information
- 113: print information
- 114: makeup image
- 202: database
- 203: eyebrow makeup
- 205: eye makeup

## Claims

1. A body appearance correction support apparatus that supports a visual correction of a body appearance using a sheet attachable to a body, comprising:
a feature analysis unit that analyzes a feature relating to an appearance shape of the body from a body image obtained by capturing an image of the body based on a skeleton of the body, and generates body feature information indicating the analyzed feature;
a makeup determination unit that determines, based on the generated body feature information, a makeup that can provide a visual correction of the appearance shape of the body; and
a print information generation unit that generates, based on the determined makeup, print information related to printing of a makeup image on the sheet.

2. The body appearance correction support apparatus according to Claim 1, wherein
the makeup that can provide the visual correction of the appearance shape of the body includes a low light makeup and a highlight makeup, and
the makeup color of the low light makeup has a lower tone or a lower L value in an Lab color space than the makeup color of the highlight makeup.

3. The body appearance correction support apparatus according to Claim 2, wherein
the makeup determination unit determines the low light makeup area and the highlight makeup area based on the body feature information.

4. The body appearance correction support apparatus according to Claim 3, wherein
the body feature information includes a skeleton feature point indicating a feature position of a skeleton of the body.

5. The body appearance correction support apparatus according to Claim 4, wherein
the body image is a face image acquired by capturing an image of a face,
the feature analysis unit determines a skeleton feature point below a zygomatic bone based on an intersection of a longitudinal line passing through an eyeball and a lateral line passing under a nose in the face image, and determines a skeleton feature point of a mandible based on a center point of a line segment connecting a center point of a jaw and a center point of lips, and
the makeup determination unit determines the low light makeup area based on an area connecting the skeleton feature point below the zygomatic bone and an apex of a temple, and determines the highlight makeup area based on an area connecting the skeleton feature point of the mandible and the center point of the jaw.

6. The body appearance correction support apparatus according to Claim 4, wherein
the feature analysis unit determines the skeleton feature point based on an area in the body image in which an amount of change in a curvature of a contour of the body is equal to or greater than a predetermined first threshold value and a difference in brightness is equal to or greater than a predetermined second threshold value.

7. The body appearance correction support apparatus according to Claim 4, wherein
the feature analysis unit determines the skeleton feature point based on an area where the amount of change between at least two body images having different facial expressions or postures is smaller than a predetermined threshold value.

8. The body appearance correction support apparatus according to Claim 3, wherein
the makeup determination unit determines the low light makeup color by lowering a color tone of a skin extracted from the low light makeup area in the body image while maintaining hue at a fixed value or by lowering an L value while maintaining an a value and a b value in an Lab color space at fixed values.

9. The body appearance correction support apparatus according to Claim 2, wherein
the ink which corresponds to the highlight makeup color and which is to be printed on the sheet includes at least one of lame, white pigment, brightener, and reflector.

10. The body appearance correction support apparatus according to Claim 3 or 4, wherein
the makeup determination unit determines a size of the highlight makeup area in accordance with a size of a curvature of the skeleton shape of the body calculated using the body feature information.

11. The body appearance correction support apparatus according to Claim 3, wherein
the makeup determination unit determines a makeup color density at a position separated by 2 mm or more from an outer periphery of a center area included in the highlight makeup area to be 50% or more of the makeup color density in the center area.

12. The body appearance correction support apparatus according to Claim 3, further comprising an input reception unit that receives a selection of a makeup image keyword which is a keyword representing an image of a makeup,
wherein the makeup determination unit determines the highlight makeup color and low light makeup color based on a color associated with the selected makeup image keyword.

13. The body appearance correction support apparatus according to Claim 3, further comprising an input reception unit that receives an input of drawing of a makeup onto the body image,
wherein the makeup determination unit determines the highlight and low light makeup areas and colors of the highlight and low light makeup areas based on the input of the drawing of the makeup.

14. The body appearance correction support apparatus according to Claim 3, wherein
the makeup determination unit determines the highlight and low light makeup areas and the colors of the highlight and low light makeup areas based on an area where a change in color occurs between at least two body images captured before and after the makeup is applied.

15. The body appearance correction support apparatus according to Claim 4, wherein
the feature analysis unit determines the acupoint position of the body based on the skeleton feature point, and
the print information generation unit generates the print information for printing an acupoint stimulation component at the determined acupoint position on the sheet.

16. A body appearance correction support method for supporting a visual correction of a body appearance using a sheet attachable to a body, comprising:
analyzing a feature related to an appearance of the body from a body image obtained by capturing an image of the body based on a skeleton of the body, and generating body feature information indicating the analyzed feature;
determining a makeup capable of providing a visual correction of the appearance of the body based on the generated body feature information; and
generating print information related to printing of a makeup image on the sheet based on the determined makeup.

17. A computer program that causes a computer to execute a process of supporting a visual correction of a body appearance using a sheet attachable to the body, the process comprising:
analyzing a feature related to an appearance of the body from a body image obtained by capturing an image of the body based on a skeleton of the body, and generating body feature information indicating the analyzed feature;
determining a makeup capable of providing a visual correction of the appearance of the body based on the generated body feature information; and
generating print information related to printing of a makeup image on the sheet based on the determined makeup.
